# FASCICULE DE BREVET EUROPEEN

(11) **EP 3 487 715 B1**
(45) Date de publication et mention de la délivrance du brevet: **10.03.2021**
(21) Numéro de dépôt: 17754395.6
(22) Date de dépôt: 20.07.2017
(51) Int. Cl.: B60C 1/00, C09J 109/00, C08L 9/00, C08G 12/06, C08G 12/40, C08L 61/32, C08L 61/06

(54) **COMPOSITION DE CAOUTCHOUC À HAUTE RIGIDITÉ**
HOCHFESTE KAUTSCHUKZUSAMMENSETZUNG
HIGH STRENGTH RUBBER COMPOSITION

(30) Priorité: 21.07.2016 FR 1656985
(43) Date de publication de la demande: 29.05.2019
(73) Titulaire: Compagnie Générale des Etablissements Michelin, 63000 Clermont-Ferrand (FR)
(72) Inventeur: DOISNEAU, David, 63040 Clermont-Ferrand Cedex 9 (FR); GAVARD-LONCHAY, Odile, 63040 Clermont Ferrand Cedex 9 (FR); THUILLIEZ, Anne-Lise, 63040 Clermont Ferrand Cedex 9 (FR)
(74) Mandataire: Louret, Sylvain
(86) Numéro de dépôt international: PCT/FR2017/051994
(87) Numéro de publication internationale: WO 2018/015679

(56) Documents cités:
- WO-A1-2015/007641
- CH-A- 439 733
- FR-A1- 3 017 133
- US-A- 2 776 948

## Description

L'invention concerne des compositions de caoutchouc, un procédé de fabrication de ces compositions, un composite de caoutchouc et un pneumatique.

Il est connu d'utiliser dans certaines parties des pneumatiques, des compositions de caoutchouc présentant une forte rigidité lors de faibles déformations du pneumatique. La résistance aux faibles déformations est une des propriétés que doit présenter un pneumatique pour répondre aux sollicitations auxquelles il est soumis.

Une forte rigidité peut être obtenue en utilisant un système de vulcanisation dit concentré, c'est-à-dire comprenant notamment des taux de soufre et d'accélérateur de vulcanisation relativement élevés.

Toutefois, un tel système de vulcanisation concentré pénalise le vieillissement à cru de la composition. Ainsi, lorsque la composition est sous forme de produit semi-fini, par exemple de bande de gomme, le soufre peut migrer en surface du produit semi-fini. Ce phénomène, appelé effleurissement, entraine une pénalisation du collant à cru du produit semi-fini lors de son stockage prolongé, avec pour conséquence une dégradation de l'adhésion entre les produits semi-finis lors de la fabrication du pneumatique.

Par ailleurs, le stockage de la composition crue contenant un système de vulcanisation concentré est susceptible d'entrainer une diminution de la phase retard de la composition lors de sa vulcanisation, c'est-à-dire le temps précédant le début de la vulcanisation. En conséquence, la composition peut commencer à cuire prématurément dans certains outils de mise en forme et la cinétique de vulcanisation est susceptible d'être modifiée et le rendement de vulcanisation d'être dégradé.

Un tel système de vulcanisation concentré pénalise également le vieillissement à cuit. En effet, on observe une dégradation des propriétés mécaniques de la composition cuite, notamment aux limites, par exemple de l'allongement à rupture.

Une forte rigidité peut autrement être obtenue en augmentant le taux de charge renforçante.

Toutefois, de manière connue, l'augmentation de la rigidité d'une composition de caoutchouc en augmentant le taux de charge peut pénaliser les propriétés d'hystérèse et donc de résistance au roulement des pneumatiques. Or, on cherche toujours à baisser la résistance au roulement des pneumatiques pour diminuer la consommation en carburant et ainsi préserver l'environnement.

Enfin, une rigidité élevée peut être obtenue en incorporant certaines résines renforçantes comme divulgué dans WO 02/10269.

Classiquement l'augmentation de la rigidité est obtenue en incorporant des résines renforçantes à base d'un système accepteur/donneur de méthylène. Les termes « accepteur de méthylène » et « donneur de méthylène » sont bien connus de l'homme du métier et largement utilisés pour designer des composés aptes à réagir ensemble pour générer par condensation une résine renforçante tridimensionnelle qui vient se superposer et s'interpénétrer avec le réseau charge renforçante/élastomère d'une part et, avec le réseau élastomère/soufre d'autre part (si l'agent de réticulation est le soufre). A l'accepteur de méthylène est associé un agent durcisseur, apte à le réticuler ou le durcir, encore appelé communément "donneur de méthylène". Des exemples de tels accepteur et donneur de méthylène sont décrits dans WO 02/10269.

Les donneurs de méthylène classiquement utilisés dans les compositions de caoutchouc pour pneumatiques sont l'hexa-méthylènetétramine (en abrégé HMT), ou l'hexamethoxyméthylmélamine (en abrégé HMMM ou H3M), ou l'hexaethoxyméthylmélamine.

Les accepteurs de méthylène classiquement utilisés dans les compositions de caoutchouc pour pneumatiques sont des résines phénoliques précondensées.

Toutefois, la combinaison de résine phénolique classiquement utilisée en tant qu'accepteur de méthylene avec l'HMT ou l'H3M en tant que donneur de méthylène, produit du formaldéhyde au cours de la vulcanisation de la composition de caoutchouc. Or, il est souhaitable de diminuer, voire de supprimer à terme le formaldéhyde des compositions de caoutchouc en raison de l'impact environnemental de ces composés et de l'évolution récente de la réglementation, notamment la réglementation européenne, sur ce type de composé.

L'invention a pour objet une composition de caoutchouc rigidifiée au moyen de composés à faible impact environnemental.

A cet effet, l'invention a pour objet une composition de caoutchouc comprenant au moins un élastomère, caractérisé en ce qu'elle comprend en outre au moins une résine à base:
A1) d'au moins un composé aromatique issu de la réaction entre un réactif de formule a) 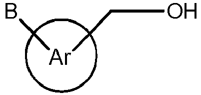 où B représente CHO ou CH₂OH
   (α)
   et un réactif de formule β) ou γ) :

   H₂N-R₁ (β)

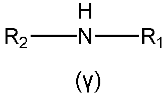

   et les mélanges de ces composés,
   dans lesquelles :
   - Ar représente un noyau aromatique, éventuellement substitué,
   - chaque radical R₁, R₂ représente, indépendamment l'un de l'autre, un radical monovalent hydrocarboné ou un radical monovalent hydrocarboné substitué ; et
A2) d'au moins un dérivé d'un composé phénolique choisi parmi :
   - A21) au moins un dérivé d'un polyphénol aromatique comprenant au moins un noyau aromatique porteur d'au moins deux groupes -O-Z en position méta l'une par rapport à l'autre, les deux positions ortho d'au moins un des groupes -O-Z étant non substituées, Z étant différent de l'hydrogène ;
   - A22) au moins un dérivé d'un monophénol aromatique comprenant au moins un noyau aromatique à six chainons portant un unique groupe -O-Z, Z étant différent de l'hydrogène,
      o les deux positions ortho du groupe -O-Z étant non substituées ou
      o au moins une position ortho et la position para du groupe -O-Z étant non substituées,
   - et leurs mélanges,
      chaque groupe -O-Z étant choisi dans le groupe constitué par les groupes -O-Si(R₇R₈R₉), -O-C((=O)(R₁₀)), -O-C((=O)(N(R₁₁R₁₂))), chaque groupe R₇, R₈, Rg et R₁₀ représente, indépendamment l'un de l'autre, un radical hydrocarboné ou un radical hydrocarboné substitué, chaque groupe R₁₁ et R₁₂ représente, indépendamment l'un de l'autre, l'hydrogène, un radical hydrocarboné ou un radical hydrocarboné substitué.

De manière inattendue, les Demanderesses ont découvert lors de leurs recherches que les composés aromatiques A1 de la composition selon l'invention permettent d'éviter la production de formaldéhyde contrairement aux donneurs de méthylène classiques. Les Demanderesses ont découvert lors de leurs recherches qu'un composé aromatique pouvait, avec un dérivé d'un composé phénolique, former une résine alternative aux résines renforçantes à base d'un système accepteur/donneur de méthylène.

En outre, la combinaison spécifique des composés aromatiques A1 et des dérivés de composés phénoliques A2 de la composition selon l'invention permet d'obtenir des compositions de caoutchouc présentant une rigidité à basse déformation équivalente voire largement améliorée par rapport aux compositions de caoutchouc classiques qui comprennent des donneurs de méthylène HMT ou H3M et supérieure par rapport à une composition de caoutchouc dépourvue de résine renforçante.

De plus, les composés de la composition selon l'invention permettent également d'éviter une réticulation précoce de la résine. En effet, un problème lié à l'utilisation de certaines résines renforçantes, notamment celle à base du composé α et du composé phénolique correspondants au dérivé, est leur capacité à réticuler de façon précoce. En effet, après l'étape de fabrication de la composition comprenant les constituants de ces résines renforçantes, la composition est mise en forme par exemple par calandrage, par exemple sous la forme d'une feuille, d'une plaque, ou encore extrudée, par exemple pour former un profilé de caoutchouc. Or, en raison de leur capacité à réticuler rapidement, ces résines renforçantes réticulent et rigidifient la composition, ce qui gêne, voire empêche, la mise en forme de la composition de caoutchouc. Grâce à l'invention,, les résines formées à partir du composé aromatique A1 et du dérivé de composé phénolique A2 se forment moins rapidement qu'à partir du composé aromatique et du composé phénolique correspondants. Cette vitesse de réaction peut être déterminée en mesurant l'évolution du couple rhéométrique en fonction du temps. Cette évolution décrit la rigidification de la composition par suite notamment de la réticulation de la résine. De la comparaison de l'évolution des couples rhéométriques d'une première composition comprenant le dérivé du composé phénolique A2 et le composé aromatique A1 et d'une deuxième composition comprenant le composé phénolique et le composé aromatique α correspondants, on voit que les composés selon l'invention permettent de retarder la réticulation de la résine par rapport à la réaction directe entre le composé phénolique et le composé aromatique α.

Les composés de la composition selon l'invention permettent également d'obtenir un maintien de la rigidité de la composition à des températures élevées, en particulier pour des températures allant jusqu'à 150°C. En particulier, la combinaison spécifique des composés aromatiques A1 et du dérivé de composé phénolique A2 de la composition selon l'invention peut permettre d'obtenir des compositions de caoutchouc présentant une tenue de la rigidité aux températures élevées améliorée par rapport à une composition de caoutchouc témoin comprenant une résine à base du composé α et du composé phénolique correspondant.

En effet, certaines résines formées à partir du composé aromatique A1 et du dérivé de composé phénolique A2 présentent une tenue à la température améliorée par rapport à une résine formée à partir du composé α et du composé phénolique correspondants. Cette tenue en température peut être déterminée en mesurant l'évolution du couple rhéométrique en fonction du temps. Cette évolution décrit la rigidification de la composition par suite notamment de la réticulation de la résine. De la comparaison des couples rhéométriques après réticulation d'une première composition comprenant le dérivé de composé phénolique A2 et le composé aromatique A1 et d'une deuxième composition comprenant le composé phénolique et le composé α correspondants, on voit que pour certaines d'entre elles le composé aromatique A1 et le dérivé de composé phénolique A2 permettent d'obtenir une valeur de couple plus élevée par rapport à la réaction directe entre le composé phénolique et le composé α correspondants. Pour expliquer le fait que les composés de la composition selon l'invention permettent d'éviter une réticulation précoce de la résine et un maintien de la rigidité de la composition à des températures élevées, les inventeurs à l'origine de l'invention émettent l'hypothèse que
- le composé aromatique A1 est un précurseur du composé α
- le dérivé du composé phénolique est un précurseur du composé phénolique
   et que ces composés, le composé aromatique A1 et le dérivé du composé phénolique A2, permettent d'éviter une réticulation immédiate de la résine en raison d'une réaction qui générerait, en différé, les fonctions hydroxyméthyles (mode de réalisation dans lequel B représente CH₂OH) ou la fonction hydroxyméthyle et la fonction aldéhyde (mode de réalisation dans lequel B représente CHO) à partir du composé aromatique A1 et en raison du radical Z de chaque groupe -O-Z qui est différent de l'hydrogène. En effet, les réactifs de formules β et γ agiraient comme des réactifs protecteurs temporaires permettant, selon l'hypothèse des inventeurs, la formation des fonctions hydroxyméthyles (mode de réalisation dans lequel B représente CH₂OH) ou de la fonction hydroxyméthyle et de la fonction aldéhyde (mode de réalisation dans lequel B représente CHO) dans des conditions réactionnelles prédéterminées (en d'autres termes la régénération du réactif de formule α) et le radical Z de chaque groupe -O-Z agirait lui aussi comme un groupe protecteur temporaire permettant, selon l'hypothèse des inventeurs, la formation d'une fonction hydroxyle dans des conditions réactionnelles prédéterminées et donc la formation du composé phénolique correspondant. Le temps mis pour régénérer le composé α et le composé phénolique, même en étant court, par exemple au moins de l'ordre de la minute, permettrait, d'une part de retarder la réticulation de la résine, et d'autre part une meilleure dispersion du composé aromatique A1 et du dérivé du composé phénolique A2 dans le mélange réactionnel ce qui permettrait d'obtenir une résine présentant une réticulation plus homogène et donc par exemple une meilleure tenue en température de la résine. Les conditions réactionnelles prédéterminées dans lesquelles la régénération du réactif de formule α et la formation des fonctions hydroxyles est possible dépendent de plusieurs paramètres tels que la pression, la température ou encore les espèces chimiques présentes dans le milieu réactionnel. Ces conditions réactionnelles sont fonction des réactifs de formules β et γ, du groupe -O-Z, et sont facilement déterminables, voire connues de l'homme du métier. Par exemple, de telles conditions réactionnelles sont le chauffage de la composition de caoutchouc à une température supérieure ou égale à 80°C, de préférence à 100°C et plus préférentiellement à 120°C.

Les réactifs de formules β et γ sont tels que la réaction entre le dérivé du composé phénolique A2 et le composé aromatique A1 permet la réticulation de la résine. De préférence, les réactifs de formules β et γ sont tels que la réaction entre le dérivé du composé phénolique A2 et le composé aromatique A1 permet la réticulation de la résine dans les mêmes conditions réactionnelles, de préférence les mêmes conditions réactionnelles de température, qu'une résine à base du composé phénolique et du réactif de formule α correspondant. De façon classique, la température est supérieure ou égale à 120°C, de préférence supérieure ou égale à 140°C.

Le groupe -O-Z est tel que la réaction entre le dérivé du composé phénolique A2 et le composé aromatique A1 permet la réticulation de la résine. De préférence, le groupe -O-Z est tel que la réaction entre le dérivé du composé phénolique A2 et le composé aromatique A1 permet la réticulation de la résine dans les mêmes conditions réactionnelles, de préférence les mêmes conditions réactionnelles de température, qu'une résine à base du composé phénolique correspondant (comportant des groupes hydroxyles à la place des groupes -O-Z) et du réactif de formule α correspondant. De façon classique, la température est supérieure ou égale à 120°C, de préférence supérieure ou égale à 140°C.

Un composé phénolique peut être un monophénol aromatique ou un polyphénol aromatique.

La dénomination « dérivé de composé phénolique » est utilisée en raison de la similitude structurelle existante entre le dérivé de composé phénolique et le composé phénolique correspondant. En effet, le dérivé de composé phénolique présente une structure analogue à celle du composé phénolique correspondant mais dans lequel :
- pour un polyphénol aromatique, l'hydrogène d'au moins deux fonctions hydroxyles est remplacé par le radical Z. Ainsi, le dérivé de polyphénol aromatique présente une formule générale (W1) ci-dessous : 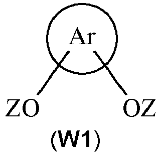 dans laquelle Ar est le noyau aromatique.
- pour un monophénol aromatique, l'hydrogène de l'unique fonction hydroxyle est remplacé par le radical Z. Ainsi, le dérivé de monophénol aromatique présente une formule générale (W2) ci-dessous : 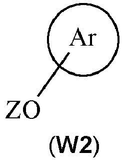 dans laquelle Ar est le noyau aromatique.

Par l'expression « résine à base de », il faut bien entendu comprendre une résine comportant le mélange et/ou le produit de la réaction entre les différents constituants de base utilisés pour la condensation finale de cette résine, de préférence uniquement le produit de la réaction entre les différents constituants de base utilisés pour cette résine, certains d'entre eux pouvant être destinés à réagir ou susceptibles de réagir entre eux ou avec leur environnement chimique proche, au moins en partie, lors des différentes phases du procédé de fabrication de la composition, des composites ou du pneumatique, en particulier au cours d'une étape de cuisson. Ainsi les constituants de base sont les réactifs destinés à réagir ensemble lors de la condensation finale de la résine et ne sont pas des réactifs destinés à réagir ensemble pour former ces constituants de base.

Conformément à l'invention, les constituants de base comprennent donc au moins un composé aromatique A1 et au moins un dérivé d'un composé phénolique A2. Dans un mode de réalisation, les constituants de base peuvent comprendre d'autres constituants additionnels différents du composé aromatique A1 et du dérivé d'un composé phénolique A2. Dans un autre mode de réalisation, les constituants de base sont constitués d'au moins un composé aromatique A1 et d'au moins un dérivé d'un composé phénolique A2.

De préférence, dans le mode de réalisation où les constituants de base comprennent d'autres constituants additionnels, ces autres constituants additionnels sont dépourvus de formaldéhyde et/ou dépourvus de donneur de méthylène choisi dans le groupe constitué par l'hexa-méthylènetétramine (HMT), l'hexamethoxyméthylmélamine (H3M), l'hexaethoxyméthylmélamine, le chlorure de lauryloxyméthylpyridinium, le chlorure d'éthoxyméthylpyridinium, des polymères d'hexaméthoxyméthylmélamine de trioxanne de formaldéhyde, l'hexakis(méthoxyméthyl)mélamine, la N,N',N"-triméthyl/-N,N',N"-triméthylolmélamine, l'hexaméthylolmélamine, la N-méthylolmélamine, la N,N'-diméthylolmélamine, la N,N',N"-tris(méthoxyméthyl)mélamine, la N,N',N"-tributyl-N,N',N"-triméthylolmélamine. Plus avantageusement, ces autres constituants additionnels sont dépourvus de formaldéhyde et dépourvus des donneurs de méthylène décrits dans ce paragraphe.

Plus préférentiellement, dans le mode de réalisation où les constituants de base comprennent d'autres constituants additionnels, ces autres constituants additionnels sont dépourvus de formaldéhyde et/ou dépourvus de donneur de méthylène choisi dans le groupe constitué par l'hexaméthylènetétramine, l'hexaéthoxyméthylmélamine, l'hexaméthoxyméthylmélamine, le chlorure de lauryloxyméthylpyridinium, le chlorure d'éthoxyméthylpyridinium, l'hexaméthoxyméthylmélamine de trioxanne et les oxyméthylmélamines N-substituées répondant à la formule générale: 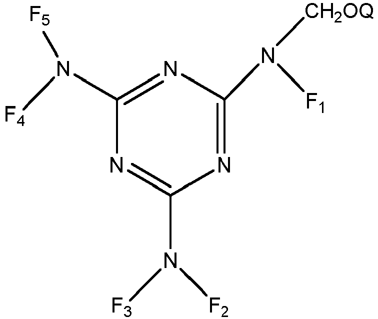 dans laquelle Q représente un groupe alkyle contenant de 1 à 8 atomes de carbone; F₁, F₂, F₃, F₄ et F₅ sont choisis, indépendamment l'un de l'autre, parmi le groupe constitué par un atome d'hydrogène, par un groupe alkyle contenant de 1 à 8 atomes de carbone, par le groupe -CH2OQ et leurs produits de condensation. Plus avantageusement, ces autres constituants additionnels sont dépourvus de formaldéhyde et dépourvus des donneurs de méthylène décrits dans ce paragraphe.

Encore plus préférentiellement, dans le mode de réalisation où les constituants de base comprennent d'autres constituants additionnels, ces autres constituants additionnels sont dépourvus de formaldéhyde et/ou dépourvus de donneur de méthylène. Plus avantageusement, ces autres constituants additionnels sont dépourvus de formaldéhyde et dépourvus des donneurs de méthylène.

Par dépourvu de formaldéhyde ou dépourvu de donneur de méthylène, on entend que le taux massique total du formaldéhyde ou du ou des donneurs de méthylène appartenant aux groupes décrits ci-dessus en poids total du ou des composés aromatiques A1 dans les constituants de base est inférieur ou égal à 10%, de préférence à 5%, plus préférentiellement à 2% et encore plus préférentiellement à 1%.

Par dépourvu de formaldéhyde et dépourvu de donneur de méthylène, on entend que le taux massique total du formaldéhyde et du ou des donneurs de méthylène appartenant aux groupes décrits ci-dessus en poids total du ou des composés aromatiques A1 dans les constituants de base est inférieur ou égal à 10%, de préférence à 5%, plus préférentiellement à 2% et encore plus préférentiellement à 1%.

Par "position méta l'une par rapport à l'autre", on entendra que les fonctions visées, par exemple les groupes -O-Z dans le polyphénol aromatique, sont portées par des carbones du noyau aromatique séparés l'un de l'autre par un unique autre carbone du noyau aromatique.

Par "position para l'une par rapport à l'autre", on entendra que les groupes visés sont à l'opposés l'un de l'autre, c'est-à-dire en positions 1 et 4 du noyau aromatique à 6 chaînons. De façon analogue, "la position para" par rapport à un groupe est une position opposée au groupe sur le noyau aromatique à 6 chaînons portant le groupe.

Par "en position ortho d'une fonction", on entendra la position occupée par le carbone du noyau aromatique immédiatement adjacent au carbone du noyau aromatique portant le groupe. De façon analogue, "la position ortho" par rapport à un groupe est la position adjacente au groupe sur le noyau aromatique portant le groupe.

Par "chaînon" d'un noyau, on entendra un atome constitutif du squelette du noyau. Ainsi, par exemple, un noyau benzénique comprend six chaînons, chaque chaînon étant constitué par un atome de carbone. Dans un autre exemple, un noyau furanique comprend cinq chaînons, quatre chaînons étant chacun constitué par un atome de carbone et le chaînon restant étant constitué par un atome d'oxygène.

« CHO » représente la fonction aldéhyde.

« CH₂OH » représente la fonction hydroxyméthyle.

Le « composé A1 » désigne, dans le cadre de l'invention, le composé aromatique défini au paragraphe I.1. Ce composé sera également désigné «composé aromatique A1 ».Le « composé A2 » désigne, dans le cadre de l'invention, le composé A21 et/ou le composé A22. Ce composé sera également indifféremment désigné « composé phénolique » ou « composé phénolique A2 ».

Le « composé A21 » désigne, dans le cadre de l'invention, le dérivé de polyphénol aromatique défini au paragraphe I.2.

Par « polyphénol aromatique » on entend un composé aromatique comprenant au moins un noyau benzénique porteur de plus d'une fonction hydroxyle.

Le « composé A22 » désigne, dans le cadre de l'invention, le dérivé de monophénol aromatique défini au paragraphe I.2.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

La composition de caoutchouc comprend donc au moins une (c'est-à-dire une ou plusieurs) résine renforçante réticulée, cette résine renforçante étant constituée par la résine selon l'invention; cette résine étant à base d'au moins un (c'est-à-dire un ou plusieurs) composé aromatique A1 et au moins un (c'est-à-dire un ou plusieurs) dérivé d'un composé phénolique A2, constituants qui vont être décrits en détail ci-après.

De préférence, le dérivé du polyphénol aromatique est obtenu par un procédé de fabrication dans lequel on fait réagir :
- un polyphénol aromatique comprenant au moins un noyau aromatique porteur d'au moins deux fonctions hydroxyles -OH en position méta l'une par rapport à l'autre, les deux positions ortho d'au moins une des fonctions hydroxyles -OH étant non substituées, et
- un composé permettant de former le groupe -O-Z à partir de chaque fonction hydroxyle.

De préférence, le dérivé du monophénol aromatique est obtenu par un procédé de fabrication dans lequel on fait réagir :
- un monophénol aromatique comprenant au moins un noyau aromatique à six chainons portant une unique fonction hydroxyle,
   - les deux positions ortho de la fonction hydroxyle étant non substituées ou
   - au moins une position ortho et la position para de la fonction hydroxyle étant non substituées.
- un composé permettant de former le groupe -O-Z à partir de la fonction hydroxyle.

Dans certains modes de réalisation préférentiels, tous les groupes -O-Z sont identiques. Toutefois, dans d'autres modes de réalisation, au moins deux groupes -O-Z sont différents.

L'invention a également pour objet une composition de caoutchouc comprenant au moins un élastomère, caractérisé en ce qu'elle comprend en outre :
A1) au moins un composé aromatique issu de la réaction entre un réactif de formule a) 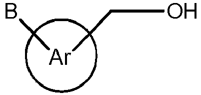 où B représente CHO ou CH₂OH (a)
   et un réactif de formule β) ou γ) :

   H₂N-R₁ (β)

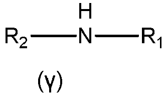

   et les mélanges de ces composés,
   dans lesquelles :
   - Ar représente un noyau aromatique, éventuellement substitué,
   - chaque radical R₁, R₂ représente, indépendamment l'un de l'autre, un radical monovalent hydrocarboné ou un radical monovalent hydrocarboné substitué ;
      et
A2) au moins un dérivé d'un composé phénolique choisi parmi :
   - A21) au moins un dérivé d'un polyphénol aromatique comprenant au moins un noyau aromatique porteur d'au moins deux groupes -O-Z en position méta l'une par rapport à l'autre, les deux positions ortho d'au moins un des groupes -O-Z étant non substituées, Z étant différent de l'hydrogène ;
   - A22) au moins un dérivé d'un monophénol aromatique comprenant au moins un noyau aromatique à six chainons portant un unique groupe -O-Z, Z étant différent de l'hydrogène
      - les deux positions ortho du groupe -O-Z étant non substituées, ou
      - au moins une position ortho et la position para du groupe -O-Z étant non substituées ;
   - et leurs mélanges,
      chaque groupe -O-Z étant choisi dans le groupe constitué par les groupes -O-Si(R₇R₈R₉), -O-C((=O)(R₁₀)), -O-C((=O)(N(R₁₁R₁₂))), chaque groupe R₇, R₈, R₉ et R₁₀ représente, indépendamment l'un de l'autre, un radical hydrocarboné ou un radical hydrocarboné substitué, chaque groupe R₁₁ et R₁₂ représente, indépendamment l'un de l'autre, l'hydrogène, un radical hydrocarboné ou un radical hydrocarboné substitué.

Un autre objet de l'invention est un procédé de fabrication d'une composition de caoutchouc à l'état cru, comprenant une étape de mélangeage :
- A1) d'au moins un composé aromatique issu de la réaction entre un réactif de formule α) 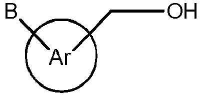 Où B représente CHO ou CH₂OH
   (α)
   et un réactif de formule β) ou γ) :

   H₂N-R₁ (β)

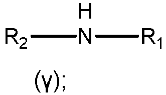

   et les mélanges de ces composés,
   dans lesquelles :
   - Ar représente un noyau aromatique, éventuellement substitué,
   - chaque radical R₁, R₂ représente, indépendamment l'un de l'autre, un radical monovalent hydrocarboné ou un radical monovalent hydrocarboné substitué ;
      et
- A2) d'au moins un dérivé d'un composé phénolique choisi parmi
   - A21) au moins un dérivé d'un polyphénol aromatique comprenant au moins un noyau aromatique porteur d'au moins deux groupes -O-Z en position méta l'une par rapport à l'autre, les deux positions ortho d'au moins un des groupes -O-Z étant non substituées, Z étant différent de l'hydrogène ;
   - A22) au moins un dérivé d'un monophénol aromatique comprenant au moins un noyau aromatique à six chainons portant un unique groupe -O-Z, Z étant différent de l'hydrogène
      ∘ les deux positions ortho du groupe -O-Z étant non substituées ou
      ∘ au moins une position ortho et la position para du groupe - O-Z étant non substituées,
   - et leurs mélanges,
      chaque groupe -O-Z étant choisi dans le groupe constitué par les groupes -O-Si(R₇R₈R₉), -O-C((=O)(R₁₀)), -O-C((=O)(N(R₁₁R₁₂))), chaque groupe R₇, R₈, Rg et R₁₀ représente, indépendamment l'un de l'autre, un radical hydrocarboné ou un radical hydrocarboné substitué, chaque groupe R₁₁ et R₁₂ représente, indépendamment l'un de l'autre, l'hydrogène, un radical hydrocarboné ou un radical hydrocarboné substitué.

De préférence, durant l'étape de mélangeage, on mélange également au moins un élastomère à la composition.

Un autre objet de l'invention est un procédé de fabrication d'une composition de caoutchouc à l'état cuit, comprenant :
- une étape de fabrication d'une composition de caoutchouc à l'état cru comprenant une étape de mélangeage :
- A1) d'au moins un composé aromatique issu de la réaction entre un réactif de formule α) 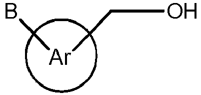 Où B représente CHO ou CH₂OH
   (α)
   et un réactif de formule β) ou γ) :

   H₂N-R₁ (β)

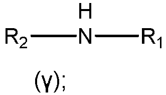

   et les mélanges de ces composés, dans lesquelles :
   - Ar représente un noyau aromatique, éventuellement substitué,
   - chaque radical R₁, R₂ représente, indépendamment l'un de l'autre, un radical monovalent hydrocarboné ou un radical monovalent hydrocarboné substitué ;
      et
- A2) d'au moins un dérivé d'un composé phénolique choisi parmi
   - A21) au moins un dérivé d'un polyphénol aromatique comprenant au moins un noyau aromatique porteur d'au moins deux groupes -O-Z en position méta l'une par rapport à l'autre, les deux positions ortho d'au moins un des groupes -O-Z étant non substituées, Z étant différent de l'hydrogène ;
   - A22) au moins un dérivé d'un monophénol aromatique comprenant au moins un noyau aromatique à six chainons portant un unique groupe -O-Z, Z étant différent de l'hydrogène
      ∘ les deux positions ortho du groupe -O-Z étant non substituées ou
      ∘ au moins une position ortho et la position para du groupe -O-Z étant non substituées,
         et leurs mélanges,
         chaque groupe -O-Z étant choisi dans le groupe constitué par les groupes -O-Si(R₇R₈R₉), -O-C((=O)(R₁₀)), -O-C((=O)(N(R₁₁R₁₂))), chaque groupe R₇, R₈, Rg et R₁₀ représente, indépendamment l'un de l'autre, un radical hydrocarboné ou un radical hydrocarboné substitué, chaque groupe R₁₁ et R₁₂ représente, indépendamment l'un de l'autre, l'hydrogène, un radical hydrocarboné ou un radical hydrocarboné substitué,
   - puis, une étape de mise en forme de la composition de caoutchouc à l'état cru,
   - puis, une étape de réticulation, par exemple par vulcanisation ou cuisson, de la composition de caoutchouc durant laquelle on réticule une résine à base du dérivé de composé phénolique A2 et du composé aromatique A1.

De préférence, durant l'étape de mélangeage, on mélange également au moins un élastomère à la composition.

Comme expliqué précédemment, les inventeurs émettent l'hypothèse selon laquelle durant l'étape de réticulation de la composition de caoutchouc, on réalise, préalablement à la réticulation de la résine :
- une étape de formation du composé α à partir du composé aromatique A1 par formation, sur le noyau aromatique Ar, de deux fonctions -CH₂OH ou d'une fonction CH₂OH et d'une fonction aldéhyde,
- une étape de formation du polyphénol aromatique à partir du dérivé ou précurseur du polyphénol aromatique par formation, sur le noyau aromatique, d'au moins deux fonctions hydroxyles en position méta l'une par rapport à l'autre, les deux positions ortho d'au moins une des fonctions hydroxyles étant non substituées, chaque fonction hydroxyle étant obtenue à partir de chaque groupe -O-Z, et/ou une étape de formation du monophénol aromatique à partir du dérivé ou précurseur de monophénol aromatique par formation, sur le noyau aromatique, d'une unique fonction hydroxyle,
   - les deux positions ortho de la fonction hydroxyle étant non substituées ou
   - au moins une position ortho et la position para de la fonction hydroxyle étant non substituées,
      chaque fonction hydroxyle étant obtenue à partir de chaque groupe -O-Z,
      et
- une étape de réticulation d'une résine à partir du composé phénolique correspondant et du composé α.

Encore un autre objet de l'invention est une composition de caoutchouc susceptible d'être obtenue par un procédé tel que décrit ci-dessus.

L'invention a aussi pour objet un composite de caoutchouc renforcé d'au moins un élément de renfort noyé dans une composition de caoutchouc telle que décrite ci-dessus.

Un autre objet de l'invention est un pneumatique comprenant une composition de caoutchouc telle que décrite ci-dessus ou un composite de caoutchouc tel que décrit ci-dessus.

On décrit également un composé aromatique issu de la réaction entre un réactif de formule α) 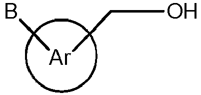 où B représente CHO ou CH₂OH
(α)
et un réactif de formule β) ou γ) :

H₂N-R₁ (β)

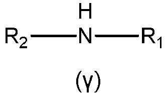

et les mélanges de ces composés, dans lesquelles :
- Ar représente un noyau aromatique, éventuellement substitué,
- chaque radical R₁, R₂ représente, indépendamment l'un de l'autre, un radical monovalent hydrocarboné ou un radical monovalent hydrocarboné substitué.

Ce composé peut être utilisé pour la fabrication d'une résine pour le renforcement d'une composition de caoutchouc. Cette résine est particulièrement adaptée pour la rigidification de ladite composition de caoutchouc. Avantageusement, une rigidification précoce de la résine est évitée. Dans certains modes de réalisation, cette résine permet d'améliorer la tenue de la rigidité aux températures élevées de compositions de caoutchouc la comprenant.

Par composition de caoutchouc, on entend que la composition comprend au moins un élastomère ou un caoutchouc (les deux termes étant synonymes) et au moins un autre composant. Une composition de caoutchouc comprend donc une matrice d'élastomère ou de caoutchouc dans laquelle est dispersé au moins l'autre composant. Une composition de caoutchouc est dans un état plastique à l'état cru (non-réticulé) et dans un état élastique à l'état cuit (réticulé) mais en aucun cas dans un état liquide. Une composition de caoutchouc ne doit pas être confondue avec un latex d'élastomère qui est une composition dans un état liquide comprenant un solvant liquide, généralement de l'eau, et au moins un élastomère ou un caoutchouc dispersé dans le solvant liquide de façon à former une émulsion. Ainsi, la composition de caoutchouc n'est pas une composition adhésive aqueuse.

Dans la présente description, sauf indication expresse différente, tous les pourcentages (%) indiqués sont des pourcentages en poids. Le sigle « pce » signifie parties en poids pour cent parties d'élastomère.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

### 1.1 - Composé aromatique A1 de la composition de caoutchouc - produit de réaction entre les réactifs α et β et/ou γ

Le premier constituant essentiel de la résine est un composé aromatique issu de la réaction entre un réactif de formule α) 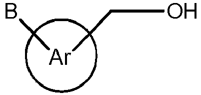 où B représente CHO ou CH₂OH
(α)
et un réactif de formule β) ou γ) :

H₂N-R₁ (β)

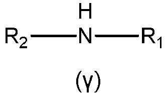

et les mélanges de ces composés, dans lesquelles :
- Ar représente un noyau aromatique, éventuellement substitué,
- chaque radical R₁, R₂ représente, indépendamment l'un de l'autre, un radical monovalent hydrocarboné ou un radical monovalent hydrocarboné substitué.

Sans pouvoir être exhaustifs, les inventeurs pensent que les composés issus de la réaction comprennent, sur le noyau aromatique du composé α, les radicaux suivants :

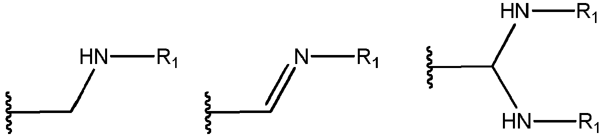

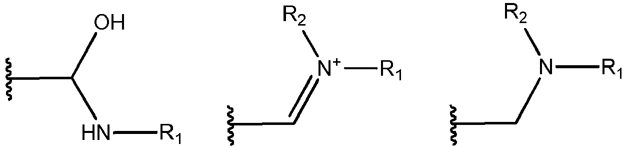

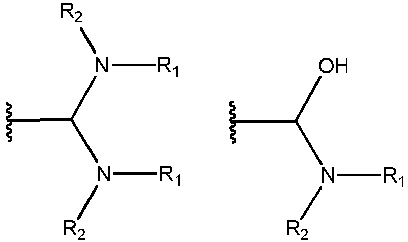

Ces radicaux peuvent ensuite être impliqués dans d'autres réactions de condensations pour relier le noyau aromatique les portant à un autre noyau aromatique.

Le composé aromatique α comprend au moins un noyau aromatique porteur d'au moins deux fonctions, l'une de ces fonctions étant une fonction hydroxyméthyle, l'autre étant une fonction aldéhyde ou une fonction hydroxyméthyle. Ainsi, conformément à l'invention, c'est ledit noyau aromatique qui est porteur des fonctions hydroxyméthyle et aldéhyde. Le composé α selon l'invention répond donc à la formule générale (I) :

HO-CH₂-Ar-B (I)

où Ar représente un noyau aromatique et B représente CHO ou CH₂OH.

Le noyau aromatique est avantageusement un noyau à 5 ou 6 chaînons, comprenant, en tant que chaînon, des atomes de carbone et éventuellement un ou plusieurs hétéroatomes, en particulier des atomes d'azote, d'oxygène, de soufre, éventuellement oxydé sous forme de N-oxyde ou de S-oxyde. Dans une variante, le noyau aromatique comprend 0, 1 ou 2 hétéroatome(s). Le reste du noyau aromatique peut être substitué ou non.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonction hydroxyméthyle.

En outre, le noyau aromatique peut également porter 0, 1 ou 2 autre(s) fonction(s), en particulier hydroxyle.

Dans le mode de réalisation dans lequel le noyau aromatique est un noyau à 6 chaînons, les fonctions B et hydroxyméthyle sont avantageusement en position méta ou en para l'une par rapport à l'autre.

Dans le mode de réalisation dans lequel le noyau aromatique est un noyau à 5 chaînons, le noyau peut comprendre un ou plusieurs hétéroatomes, en particulier des atomes d'azote, d'oxygène, de soufre, éventuellement oxydé sous forme de N-oxyde ou de S-oxyde. Avantageusement, le noyau aromatique comprend 1 ou 2 hétéroatome(s), de préférence 1 hétéroatome.

Dans ce mode de réalisation dans lequel le noyau aromatique est un noyau à 5 chaînons, au moins une des trois conditions suivantes est respectée :
- le noyau aromatique comprend 0 ou une seule fonction aldéhyde ;
- le noyau aromatique comprend une ou deux fonctions hydroxyméthyle ;
- outre les fonctions aldéhyde et hydroxyméthyle, le reste du noyau aromatique n'est pas substitué.

Avantageusement, ces trois conditions sont respectées.

Dans un premier cas, le noyau aromatique comprend
- une seule fonction aldéhyde ;
- une seule fonction hydroxyméthyle ;
- outre les fonctions aldéhyde et hydroxyméthyle, le reste du noyau aromatique n'est pas substitué.

Dans un deuxième cas, le noyau aromatique comprend
- 0 fonction aldéhyde ;
- deux fonctions hydroxyméthyle ;
- outre les fonctions hydroxyméthyle, le reste du noyau aromatique n'est pas substitué.

Avantageusement, le composé α est de formule générale (II) : 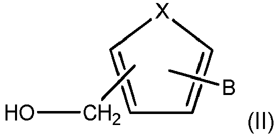 dans laquelle B représente CHO ou CH₂OH, X représente O, NR₃, NO, S, SO, SO₂, SR₄R₅, R₃ représente un hydrogène, un groupe alkyle, aryle, arylalkyle, alkylaryle ou cycloalkyle, R₄, R₅ représentent chacun, indépendamment les uns des autres, un hydrogène, un groupe alkyle, aryle, arylalkyle, alkylaryle ou cycloalkyle.

Avantageusement, le composé α est de formule générale (II') : 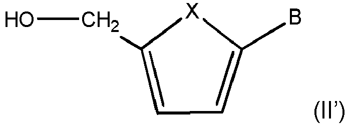 dans laquelle X, B sont tels que définis précédemment.

Dans un mode de réalisation particulièrement avantageux, B représente CHO. Dans un autre mode de réalisation, B représente CH₂OH.

Dans le mode de réalisation où B représente CHO, sans pouvoir être exhaustifs, les inventeurs pensent que les composés issus de cette réaction comprennent majoritairement les composés suivants :

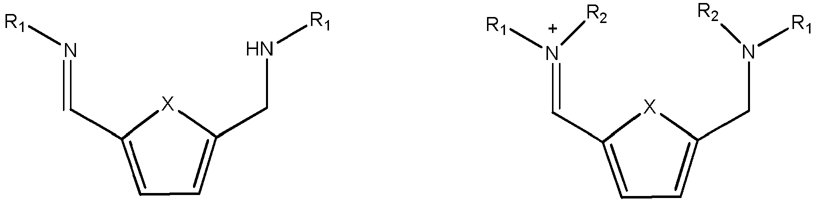

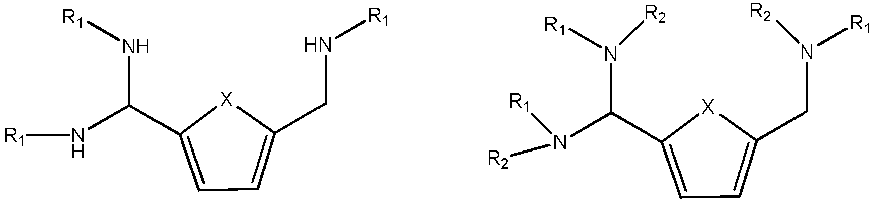

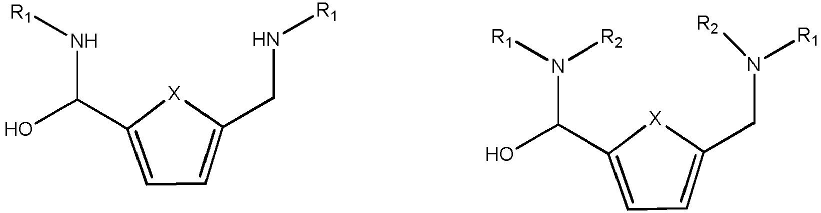

Selon un mode de réalisation préférentiel, X représente O.

Dans une variante, le composé α est de formule (IIa) : 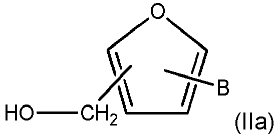 B étant tel que défini précédemment
et plus particulièrement de formule (II'a1) ou (II'a2) :

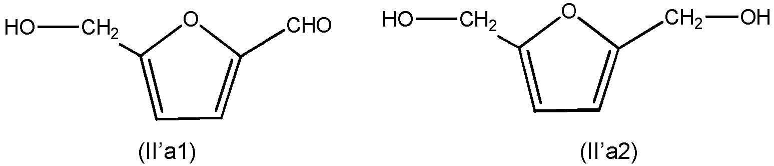

Le 5-(hydroxyméthyl)-furfural (II'a1) est un aldéhyde particulièrement adapté, étant donné que ce composé organique peut facilement être issu de ressources renouvelables. En effet, il est issu notamment de la déshydratation de certains sucres tels que le fructose, le glucose, le sucrose, la cellulose et l'inuline.

Dans ce mode de réalisation, sans pouvoir être exhaustifs, les inventeurs pensent que les composés issus de cette réaction comprennent majoritairement les composés suivants :

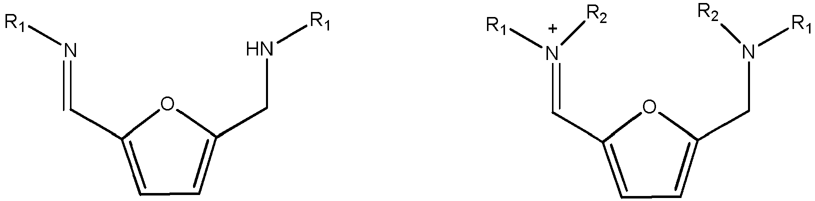

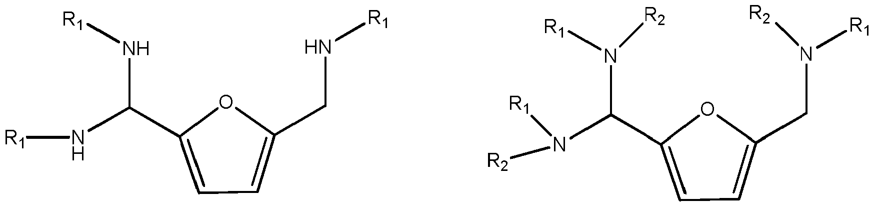

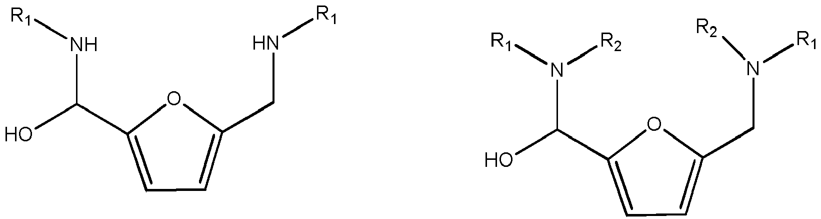

Dans un autre mode de réalisation, X représente NR₃ ou NO, avantageusement NR₃. R₃ est tel que défini précédemment.

Dans une variante, le composé α est de formule (IIb) : 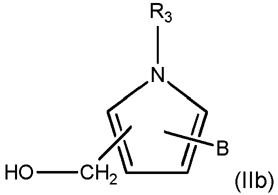 B étant tel que défini précédemment
et plus particulièrement de formule (II'b1) ou (II'b2) : 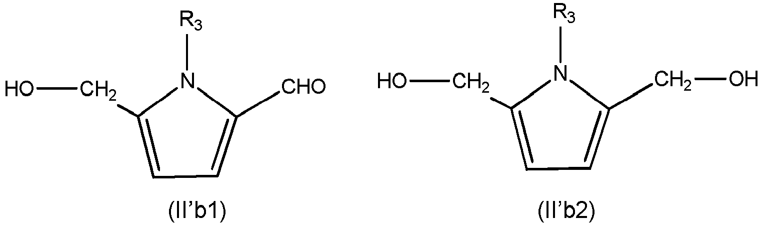 dans lesquelles R₃ représente un hydrogène, un groupe alkyle, aryle, arylalkyle, alkylaryle ou cycloalkyle. Avantageusement R₃ représente un hydrogène ou un groupe alkyle en C₁-C₆.

Dans un autre mode de réalisation, X représente S, SO, SO₂ ou SR₄R₅.

Dans une variante, le composé α est de formule (IIc) :
B étant tel que défini précédemment 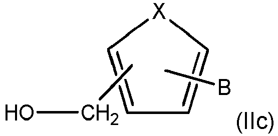 avec X représente S, SR₄R₅, SO, SO₂ R₄, R₅ représentent chacun, indépendamment les uns des autres, un hydrogène, un groupe alkyle, aryle, arylalkyle, alkylaryle ou cycloalkyle, B étant tel que défini précédemment ;
et plus particulièrement de formule (II'c1) ou (II'c2) : 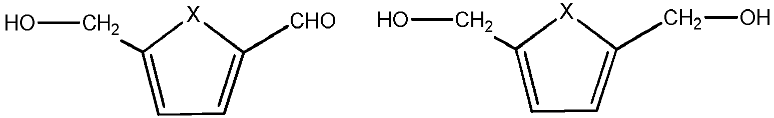 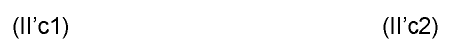 dans laquelle X représente S, SR₄R₅, SO, SO₂ R₄, R₅ représentent chacun, indépendamment les uns des autres, un hydrogène, un groupe alkyle, aryle, arylalkyle, alkylaryle ou cycloalkyle.

Le composé α peut ainsi être :

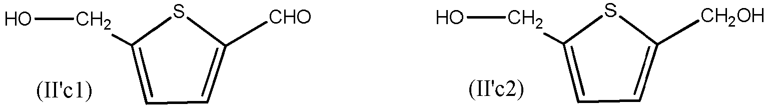

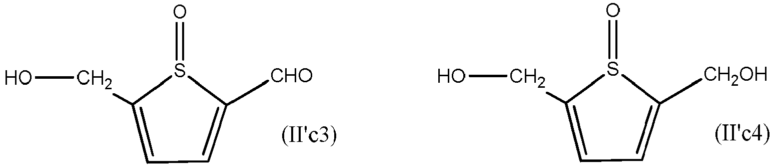

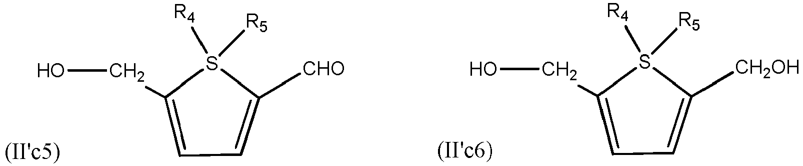

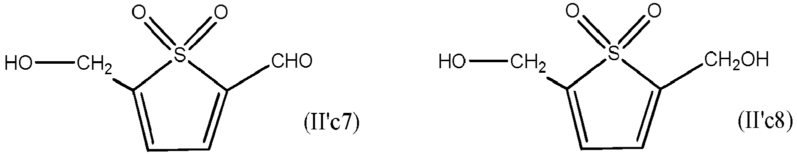

Avantageusement R₄, R₅ représentent chacun, l'un indépendamment de l'autre, un radical alkyle en C₁-C₆.

Le composé α est avantageusement de formule (II'c1) ou (II'c2).

Dans une autre variante, le noyau aromatique est un noyau à 6 chaînons, pouvant comprendre 0, un ou plusieurs hétéroatomes, en particulier d'azote, éventuellement oxydé sous forme de N-oxyde. Dans une variante, le noyau aromatique comprend 0, 1, ou 2 hétéroatome(s).

Les fonctions B et hydroxyméthyle sont avantageusement en position méta ou en para l'une par rapport à l'autre.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonctions hydroxyméthyle.

En outre, le noyau aromatique peut également porter 0, 1 ou 2 autre(s) fonction(s), en particulier hydroxyle.

Avantageusement, le composé α est de formule générale (III) : 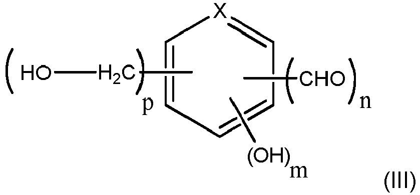 dans laquelle X représente C ou NR₃, n vaut 0, 1 ou 2, m vaut 0 ou 1, p vaut 1, 2 ou 3. R₁ représente un hydrogène, un groupe alkyle, aryle, arylalkyle, alkylaryle ou cycloalkyle. Conformément à l'invention, p+n>1 avec p>0.

Avantageusement R₃ représente un hydrogène ou un groupe alkyle en C₁-C₆.

Dans une variante, n vaut 1, m vaut 0 et p vaut 1.

Dans une autre variante, n vaut 1, m vaut 1 et p vaut 1.

Dans une autre variante, n vaut 2, m vaut 1 et p vaut 1.

Dans une autre variante, n vaut 1, m vaut 1 et p vaut 2.

Dans une autre variante, n vaut 0, m vaut 0 et p vaut 2.

Dans une autre variante, n vaut 0, m vaut 1 et p vaut 2.

Dans une autre variante, n vaut 1, m vaut 1 et p vaut 2.

Dans une autre variante, n vaut 0, m vaut 1 et p vaut 3.

Préférentiellement le noyau aromatique du composé de formule (III) est un noyau benzénique. Plus préférentiellement, ce composé de formule (III) est choisi dans le groupe constitué par le 2-hydroxymethyl-benzène-1-carboxaldéhyde, le 3- hydroxymethyl-benzène-1-carboxaldéhyde, le 4-hydroxymethyl-benzène-1-carboxaldéhyde, le 3-hydroxymethyl-6-hydroxy-benzène-1-carboxaldéhyde, le 3-hydroxymethyl-4-hydroxy-benzène-1-carboxaldéhyde, le 3-hydroxymethyl-2-hydroxy-benzène-1-carboxaldéhyde, le 3-hydroxymethyl-2-hydroxy-benzène-1,5-dicarboxaldéhyde, le 5-hydroxymethyl-2-hydroxy-benzène-1,3-dicarboxaldéhyde, le 3,5-hydroxymethyl-4-hydroxy-benzène-1-carboxaldéhyde, le 3,5-hydroxymethyl-2-hydroxy-benzène-1-carboxaldéhyde, le 1,2-hydroxymethyl-benzène, le 1,3-hydroxymethyl-benzène, le 1,4-hydroxymethyl-benzène, le 1,3-hydroxymethyl-6-hydroxy-benzène, le 1,3-hydroxymethyl-4-hydroxy-benzène, le 1,3-hydroxymethyl-2-hydroxy-benzène, le 1,3,5-hydroxymethyl-2-hydroxy-benzène, le 1,3-hydroxymethyl-6-hydroxy-benzène, le 1,3,5-hydroxymethyl-4-hydroxy-benzène, le 1,3,2-hydroxymethyl-2-hydroxy-benzène et les mélanges de ces composés.

Encore plus préférentiellement le composé aromatique utilisé est le 1-hydroxymethyl-benzène-4-carboxaldéhyde de formule (IIIa) ou le 1,4-hydroxymethyl-benzène de formule (IIIb) :

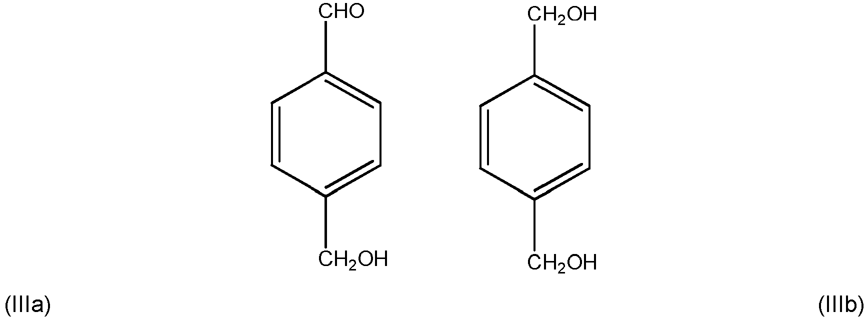

De préférence, la composition est dépourvue de formaldéhyde et/ou dépourvue de donneur de méthylène choisi dans le groupe constitué par l'hexa-méthylènetétramine (HMT), l'hexamethoxyméthylmélamine (H3M), l'hexaethoxyméthylmélamine, le chlorure de lauryloxyméthylpyridinium, le chlorure d'éthoxyméthylpyridinium, des polymères d'hexaméthoxyméthylmélamine de trioxanne de formaldéhyde, l'hexakis(méthoxyméthyl)mélamine, la N,N',N"-triméthyl/-N,N',N"-triméthylolmélamine, l'hexaméthylolmélamine, la N-méthylolmélamine, la N,N'-diméthylolmélamine, la N,N',N"-tris(méthoxyméthyl)mélamine, la N,N',N"-tributyl-N,N',N"-triméthylolmélamine. Plus avantageusement, la composition est dépourvue de formaldéhyde et dépourvue des donneurs de méthylène décrits dans ce paragraphe.

Plus préférentiellement, la composition est dépourvue de formaldéhyde et/ou dépourvue de donneur de méthylène choisi dans le groupe constitué par l'hexaméthylènetétramine, l'hexaéthoxyméthylmélamine, l'hexaméthoxyméthylmélamine, le chlorure de lauryloxyméthylpyridinium, le chlorure d'éthoxyméthylpyridinium, l'hexaméthoxyméthylmélamine de trioxanne et les oxyméthylmélamines N-substituées répondant à la formule générale: 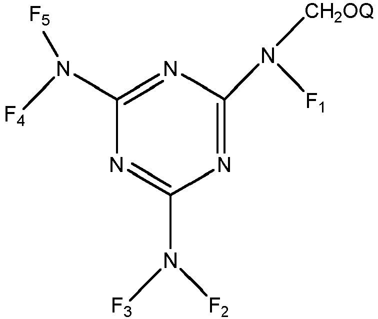 dans laquelle Q représente un groupe alkyle contenant de 1 à 8 atomes de carbone; F₁, F₂, F₃, F₄ et F₅ sont choisis, indépendamment l'un de l'autre, parmi le groupe constitué par un atome d'hydrogène, par un groupe alkyle contenant de 1 à 8 atomes de carbone, par le groupe -CH2OQ et leurs produits de condensation. Plus avantageusement, la composition est dépourvue de formaldéhyde et dépourvue des donneurs de méthylène décrits dans ce paragraphe.

Encore plus préférentiellement, la composition est dépourvue de formaldéhyde et/ou dépourvue de donneur de méthylène. Plus avantageusement, la composition est dépourvue de formaldéhyde et dépourvue des donneurs de méthylène.

Par dépourvue de formaldéhyde ou dépourvue de donneur de méthylène, on entend que le taux massique total du formaldéhyde ou du ou des donneurs de méthylène appartenant aux groupes décrits ci-dessus en poids total du ou des composés aromatiques A1 dans la composition est inférieur ou égal à 10%, de préférence à 5%, plus préférentiellement à 2% et encore plus préférentiellement à 1%.

Par dépourvue de formaldéhyde et dépourvue de donneur de méthylène, on entend que le taux massique total du formaldéhyde et du ou des donneurs de méthylène appartenant aux groupes décrits ci-dessus en poids total du ou des composés aromatiques A1 dans la composition est inférieur ou égal à 10%, de préférence à 5%, plus préférentiellement à 2% et encore plus préférentiellement à 1%.

Dans un mode de réalisation, le radical R₁ représente un radical monovalent choisi dans le groupe constitué par les radicaux alkyl, aryl, AL-NH₂ avec AL représentant un radical monovalent alkyl, AR-NH₂ avec AR représentant un radical monovalent aryl, AL-NR₂H avec AL représentant un radical monovalent alkyl et AR-NR₂H avec AR représentant un radical monovalent aryl. Dans ce mode de réalisation, le réactif **β** peut donc être une amine primaire (radicaux alklyl et aryl), une diamine primaire (radicaux AL-NH₂, AR-NH₂) ou une diamine comprenant une fonction amine primaire et une fonction amine secondaire. Dans ce mode de réalisation, le réactif **γ** peut donc être une amine secondaire (radicaux alklyl et aryl), une diamine secondaire (radicaux AL-NR₂H et AR-NR₂H) ou une diamine comprenant une fonction amine primaire et une fonction amine secondaire.

De préférence, le radical R₁ représente un radical monovalent choisi dans le groupe constitué par les radicaux AL-NH₂ avec AL représentant un radical monovalent alkyl, AR-NH₂ avec AR représentant un radical monovalent aryl, AL-NR₂H avec AL représentant un radical monovalent alkyl et AR-NR₂H avec AR représentant un radical monovalent aryl. L'utilisation d'une diamine primaire ou secondaire permet, lors de la régénération du composé α, à partir du composé aromatique A1, de générer une diamine dans la composition de caoutchouc qui peut être utilisée en tant que molécule réactive vis-à-vis d'autres molécules présentes dans la composition, par exemple vis-à-vis des molécules impliquées dans la réaction de vulcanisation afin d'accélérer le démarrage de la vulcanisation.

Plus préférentiellement, le radical monovalent alkyl AL est un radical alkyl linéaire comprenant un nombre d'atomes de carbone allant de 1 à 15, de préférence de 2 à 12 et plus préférentiellement de 2 à 8.

Dans un autre mode de réalisation, le radical R₁ présente la formule suivante : 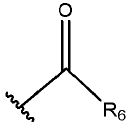 dans laquelle R₆ représente un radical monovalent hydrocarboné ou un radical monovalent hydrocarboné substitué.

Dans une première variante, R₆ représente un radical monovalent choisi dans le groupe constitué par les radicaux alkylène, arylène, arylalkylène, alkylarylène, cycloalkylène, alcénylène, de préférence dans le groupe constitué par les radicaux alkylène et arylène. Dans cette variante, le réactif **β** ou **γ** peut donc être un amide primaire (réactif **β**) ou secondaire (réactif **γ**).

Dans une deuxième variante, le radical R₁ est choisi dans le groupe constitué par les radicaux de formules suivantes : 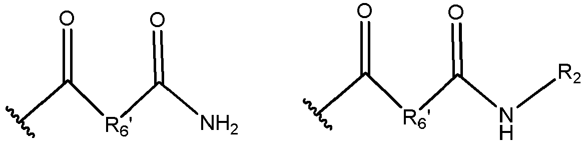 dans laquelle R₆' représente un radical divalent choisi dans le groupe constitué par les radicaux alkylène, arylène, arylalkylène, alkylarylène, cycloalkylène, alcénylène.

Plus préférentiellement, le radical divalent alkylène R₆' est un radical alkylène linéaire comprenant un nombre d'atomes de carbone allant de 1 à 15, de préférence de 2 à 12 et plus préférentiellement de 2 à 8.

Dans cette variante, le réactif **β** ou **γ** peut donc être un di-amide primaire (réactif **β**) ou secondaire (réactif γ) ou un diamide comprenant un amide primaire et un amide secondaire.

Dans encore un autre mode de réalisation, le radical R₁ présente la formule suivante : 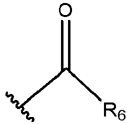 dans laquelle R₆ représente NH₂.

Dans cet autre mode de réalisation, le réactif **β** est l'urée.

Avantageusement, le radical R₂ représente un radical monovalent choisi dans le groupe constitué par les radicaux alkyl, aryl, arylalkyl, alkylaryl, cycloalkyl et alcényl.

Avantageusement, chaque radical R₁, R₂ est dépourvu de fonction réactive vis-à-vis d'un composé phénolique. Par fonction réactive, on entend ici une fonction qui réagirait dans des conditions réactionnelles nécessaires à la régénération du composé de formule α et dans des conditions réactionnelles nécessaires à la réticulation de la résine. Très préférentiellement, chaque radical R₁, R₂ est donc, par exemple, dépourvu de fonction aldéhyde et hydroxyméthyle.

### I.2 - Dérivé de composé phénolique A2 de la composition de caoutchouc : dérivé de polyphénol aromatique et/ou dérivé de monophénol aromatique - composés A21 et/ou A22

Dans un mode de réalisation, le deuxième constituant essentiel de la résine est un dérivé de polyphénol aromatique A21 comportant un ou plusieurs noyau(x) aromatique(s). Le dérivé de polyphénol aromatique comprend au moins un noyau aromatique porteur d'au moins deux groupes -O-Z en position méta l'un par rapport à l'autre, les deux positions ortho d'au moins un de ces groupes -O-Z étant non substituées.

Dans un autre mode de réalisation, le deuxième constituant essentiel de la résine est un dérivé de monophénol aromatique A22 comprenant au moins un noyau aromatique à six chainons portant un unique groupe -O-Z. Sur ce monophénol aromatique, les deux positions ortho du groupe -O-Z sont non substituées, ou bien au moins une position ortho et la position para du groupe -O-Z sont non substituées.

Dans encore un autre mode de réalisation, le deuxième constituant essentiel est un mélange du dérivé de polyphénol aromatique A21 et du dérivé de monophénol aromatique A22 tels que décrits ci-dessus.

Conformément à l'invention, le composé A21 peut être, dans un mode de réalisation, une molécule simple de dérivé de polyphénol aromatique comprenant un ou plusieurs noyaux aromatiques, au moins un de ces noyaux aromatiques, voire chaque noyau aromatique, étant porteur d'au moins deux groupes -O-Z en position méta l'un par rapport à l'autre, les deux positions ortho d'au moins un de ces groupes -O-Z étant non substituées.

De façon analogue, le composé A22) peut être, dans un mode de réalisation, une molécule simple de dérivé de monophénol aromatique comprenant un ou plusieurs noyaux aromatiques à six chainons, au moins un de ces noyaux aromatiques à six chainons, voire chaque noyau aromatique à six chainons, étant porteur d'un unique groupe -O-Z, les deux positions ortho du groupe -O-Z sont non substituées, ou bien, au moins une position ortho et la position para du groupe -O-Z sont non substituées.

De telles molécules simples ne comprennent pas de motif répétitif.

Conformément à l'invention, le composé A21 peut être, dans un autre mode de réalisation, une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé susceptible de réagir avec le polyphénol comprenant au moins une fonction aldéhyde et/ou au moins un composé susceptible de réagir avec le polyphénol comprenant au moins deux fonctions hydroxyméthyle portées par un noyau aromatique,
   les fonctions hydroxyles de la résine pré-condensée restées réactives à l'issue de la condensation de la résine pré-condensée étant substituées par des groupes -O-Z.

Les fonctions hydroxyles restées réactives sont celles qui sont susceptibles de réagir pour former le groupe -O-Z, ce sont également celles susceptibles de réagir avec le composé aromatique A1. Les groupes -O-Z formeront après déprotection, c'est à dire après libération du groupement protecteur temporaire, des fonctions hydroxyles qui pourront être impliquées dans la réaction de condensation de la résine pré-condensée avec le composé aromatique A1.

Une telle résine pré-condensée à base de polyphénol aromatique est conforme à l'invention et comprend, contrairement à la molécule simple décrite ci-dessus, un motif répétitif. En l'espèce, le motif répétitif comprend au moins un noyau aromatique porteur d'au moins deux groupes identiques ou différents et représentant chacun indépendamment une fonction hydroxyle ou un groupe -O-Z, ces deux groupes étant en position méta l'un par rapport à l'autre, les deux positions ortho d'au moins un de ces groupes étant non substituées. Dans ce mode de réalisation, afin de former le composé A21 sous forme de résine pré-condensée, on forme la résine pré-condensée à base d'un polyphénol aromatique comprenant au moins un noyau aromatique porteur d'au moins deux fonctions hydroxyles -OH en position méta l'une par rapport à l'autre, les deux positions ortho d'au moins une des fonctions hydroxyles -OH étant non substituées, et on fait réagir cette résine pré-condensée avec un composé permettant de former le groupe -O-Z à partir de chaque fonction hydroxyle restée réactive à l'issue de la condensation de la résine pré-condensée.

D'une façon analogue et conformément à l'invention, le composé A22 peut être, dans un autre mode de réalisation, une résine pré-condensée à base :
- d'au moins un monophénol aromatique comprenant au moins un noyau aromatique à six chainons portant une unique fonction hydroxyle :
   - les deux positions ortho de la fonction hydroxyle sont non substituées, ou
   - au moins une position ortho et la position para de la fonction hydroxyle sont non substituées;
- d'au moins un composé susceptible de réagir avec le monophénol comprenant au moins une fonction aldéhyde et/ou au moins un composé susceptible de réagir avec le monophénol comprenant au moins deux fonctions hydroxyméthyle portées par un noyau aromatique,
   les fonctions hydroxyles de la résine pré-condensée restées réactives à l'issue de la condensation de la résine pré-condensée étant substituées par des groupes -O-Z.

Les fonctions hydroxyles restées réactives sont celles qui sont susceptibles de réagir pour former le groupe -O-Z, ce sont également celles susceptibles de réagir avec le composé aromatique A1. Les groupes -O-Z formeront après déprotection, c'est à dire après libération du groupement protecteur temporaire, des fonctions hydroxyles qui pourront être impliquées dans la réaction de condensation de la résine pré-condensée avec le composé aromatique A1.

Une telle résine pré-condensée à base de monophénol aromatique est conforme à l'invention et comprend, contrairement à la molécule simple décrite ci-dessus, un motif répétitif. En l'espèce, le motif répétitif comprend au moins un noyau aromatique à six chainons porteur d'un unique groupe, ce groupe étant un radical -O-Z ou -OH, les deux positions ortho dudit groupe -O-Z ou -OH étant non substituées, ou bien, au moins une position ortho et la position para dudit groupe -O-Z ou -OH sont non substituées. Dans ce mode de réalisation, afin de former le composé A22 sous forme de résine pré-condensée, on forme la résine pré-condensée à base d'un un monophénol aromatique comprenant au moins un noyau aromatique à six chainons portant une unique fonction hydroxyle :
- les deux positions ortho de la fonction hydroxyle sont non substituées, ou
- au moins une position ortho et la position para de la fonction hydroxyle sont non substituées,
   et on fait réagir cette résine pré-condensée avec un composé permettant de former le groupe -O-Z à partir de chaque fonction hydroxyle restée réactive à l'issue de la condensation de la résine pré-condensée.

Dans un autre mode de réalisation, le composé A21 est un mélange d'un dérivé d'un polyphénol aromatique formant une molécule simple et d'une résine pré-condensée à base de polyphénol aromatique dans laquelle les fonctions hydroxyles de la résine pré-condensée restées réactives à l'issue de la condensation de la résine pré-condensée sont substituées par des groupes -O-Z.

Dans un autre mode de réalisation, le composé A22) est un mélange d'un dérivé d'un monophénol aromatique formant une molécule simple et d'une résine pré-condensée à base de monophénol aromatique dans laquelle les fonctions hydroxyles de la résine pré-condensée restées réactives à l'issue de la condensation de la résine pré-condensée sont substituées par des groupes -O-Z.

Dans les modes de réalisation particuliers qui suivent, on décrit le ou les noyaux aromatiques du dérivé de polyphénol aromatique et/ou du dérivé de monophénol aromatique. Par souci de clarté, on y décrit le « dérivé du polyphénol aromatique » et/ou le « dérivé du monophénol aromatique » sous sa forme de molécule simple. Le polyphénol aromatique et/ou le monophénol aromatique à l'origine des dérivés correspondants pourront ensuite être condensés et définiront en partie le motif répétitif. Les caractéristiques de la résine pré-condensée sont décrites plus en détail par la suite.

### Dérivé de polyphénol aromatique A21

Dans un mode de réalisation préféré, le noyau aromatique du dérivé du polyphénol aromatique est porteur de trois groupes -O-Z en position méta les uns par rapport aux autres.

De préférence, les deux positions ortho de chaque groupe -O-Z sont non substituées. On entend par là que les deux atomes de carbone situés de part et d'autre (en position ortho) de l'atome de carbone porteur du groupe -O-Z sont porteurs d'un simple atome d'hydrogène.

Encore plus préférentiellement, le reste du noyau aromatique du dérivé du polyphénol aromatique est non substitué. On entend par là que les autres atomes de carbone du reste du noyau aromatique (ceux autres que les atomes de carbone porteurs des groupes -O-Z) sont porteurs d'un simple atome d'hydrogène.

Dans un mode de réalisation, le dérivé du polyphénol aromatique comprend plusieurs noyaux aromatiques, au moins deux d'entre eux étant chacun porteur d'au moins deux groupes -O-Z en position méta l'un par rapport à l'autre, les deux positions ortho d'au moins un des groupes -O-Z d'au moins un noyau aromatique étant non substituées.

Dans un mode de réalisation préféré, au moins un des noyaux aromatiques du dérivé du polyphénol aromatique est porteur de trois groupes -O-Z en position méta les uns par rapport aux autres.

De préférence, les deux positions ortho de chaque groupe -O-Z d'au moins un noyau aromatique sont non substituées.

Encore plus préférentiellement, les deux positions ortho de chaque groupe -O-Z de chaque noyau aromatique sont non substituées.

Avantageusement, le noyau aromatique porteur d'au moins deux fonctions hydroxyle en position méta l'une par rapport à l'autre, les deux positions ortho d'au moins une des fonctions hydroxyle étant non substituées, est un noyau benzénique.

Avantageusement, chaque noyau aromatique du dérivé du polyphénol aromatique est un noyau benzénique.

A titre d'exemple de dérivé de polyphénol aromatique comportant un seul noyau aromatique, on peut citer en particulier, les dérivés du résorcinol et du phloroglucinol, de formules développées (IV) et (V) :

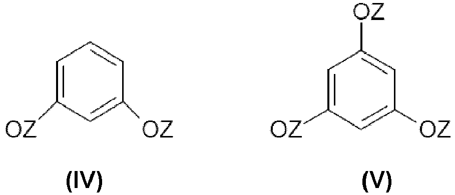

A titres d'exemples, dans le cas où le dérivé du polyphénol aromatique comporte plusieurs noyaux aromatiques, au moins deux de ces noyaux aromatiques, identiques ou différents, sont choisis parmi ceux de formules générales : 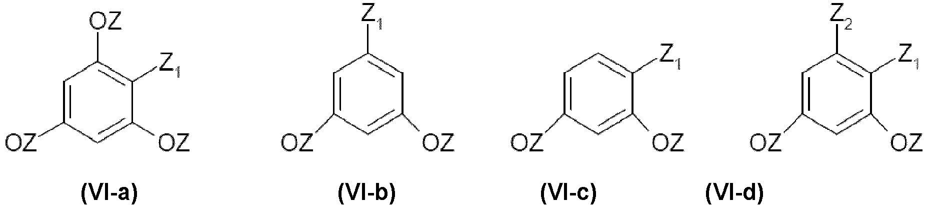 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste du dérivé du polyphénol aromatique.

Un autre exemple de dérivé de polyphénol aromatique est un dérivé du 2,2',4,4'-tétrahydroxydiphényl sulfide, dérivé ayant la formule développée suivante (VII) :

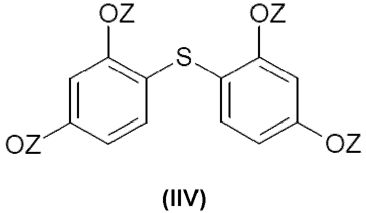

Un autre exemple de dérivé de polyphénol aromatique est un dérivé de la 2,2',4,4'-tétrahydroxybenzophénone, dérivé de formule développée suivante (VIII) :

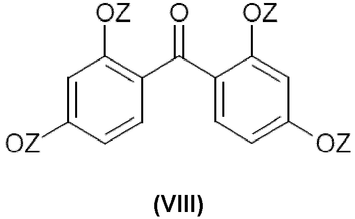

On note que chaque composé **VII** et **VIII** est un dérivé de polyphénol aromatique comportant deux noyaux aromatiques (de formules **VI-c)** dont chacun est porteur d'au moins deux (en l'occurrence de deux) groupes -O-Z en position méta l'un par rapport à l'autre.

On note que dans le cas d'un dérivé d'un polyphénol aromatique comportant au moins un noyau aromatique conforme à la formule **VI-b**, les deux positions ortho de chaque groupe -O-Z d'au moins un noyau aromatique sont non substituées. Dans le cas d'un dérivé d'un polyphénol aromatique comportant plusieurs noyaux aromatiques conformes à la formule **VI-b**, les deux positions ortho de chaque groupe -O-Z de chaque noyau aromatique sont non substituées.

Selon un mode de réalisation de l'invention, le dérivé du polyphénol aromatique est choisi dans le groupe constitué par un dérivé du résorcinol (**IV**), un dérivé du phloroglucinol (**V**), un dérivé du 2,2',4,4'-tétrahydroxydiphényl sulfide (**VII**), un dérivé de la 2,2',4,4'-tétrahydroxybenzophenone (**VIII**) et les mélanges de ces composés. Dans un mode de réalisation particulièrement avantageux, le dérivé du polyphénol aromatique est un dérivé du phloroglucinol (**V**).

Dans un mode de réalisation, le composé A21 comprend une résine pré-condensée à base d'un polyphénol aromatique tel que décrit dans l'un quelconque de ces modes de réalisations, les fonctions hydroxyles de la résine pré-condensée restées réactives à l'issue de la condensation de la résine pré-condensée étant substituées par des groupes -O-Z.

Cette résine pré-condensée est avantageusement à base :
- d'au moins un polyphénol aromatique tel que défini précédemment, et préférentiellement choisi dans le groupe constitué par le résorcinol, le phloroglucinol, le 2,2',4,4'-tétrahydroxydiphényl sulfide, la 2,2',4,4'-tétrahydroxybenzophenone, et leurs mélanges ; et
- d'au moins un composé susceptible de réagir avec le polyphénol comprenant au moins une fonction aldéhyde et/ou au moins un composé susceptible de réagir avec le polyphénol comprenant au moins deux fonctions hydroxyméthyle portées par un noyau aromatique.

Le composé susceptible de réagir avec le polyphénol comprenant au moins une fonction aldéhyde et/ou le composé susceptible de réagir avec le polyphénol comprenant au moins deux fonctions hydroxyméthyle portées par un noyau aromatique peut être un composé aromatique A1 tel que défini précédemment au paragraphe I.1, un composé de formule Ar-(CHO)₂, où Ar est tel que défini précédemment pour le composé aromatique A1 du paragraphe I.1, ou tout autre aldéhyde. Avantageusement, ledit composé susceptible de réagir avec le polyphénol comprenant au moins une fonction aldéhyde et/ou ledit composé susceptible de réagir avec le polyphénol comprenant au moins deux fonctions hydroxyméthyle portées par un noyau aromatique est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le benzaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de polyphénol aromatique, le motif répétitif comprend au moins un noyau aromatique porteur d'au moins deux groupes identiques ou différents et représentant chacun indépendamment une fonction hydroxyle ou un groupe -O-Z, ces deux groupes étant en position méta l'une par rapport à l'autre, au moins un des atomes de carbone du noyau aromatique, qui était non substitué avant la condensation de la résine pré-condensée, étant relié à un autre motif.

Quel que soit le composé autre que le polyphénol aromatique à la base de la résine pré-condensée, cette résine pré-condensée est dépourvue de formaldéhyde libre. En effet, même dans le cas où la résine pré-condensée est à base d'un polyphénol aromatique tel que décrit précédemment et de formaldéhyde, le formaldéhyde ayant déjà réagi avec le polyphénol aromatique, la résine pré-condensée est dépourvue de formaldéhyde libre susceptible de pouvoir réagir avec un composé A1 conforme à l'invention dans une étape ultérieure.

Le composé A21 peut également comprendre un mélange d'une molécule libre de dérivé de polyphénol aromatique et d'une résine pré-condensée à base de polyphénol aromatique, les fonctions hydroxyles de la résine pré-condensée restées réactives à l'issue de la condensation de la résine pré-condensée étant substituées par des groupes -O-Z. En particulier, le composé A21 peut également comprendre un mélange de dérivé du phloroglucinol et d'une résine pré-condensée à base de phloroglucinol, les fonctions hydroxyles de la résine pré-condensée restées réactives à l'issue de la condensation de la résine pré-condensée étant substituées par des groupes -O-Z.

### Dérivé du monophénol aromatique A22

Le monophénol A22 peut être conforme à deux variantes. Dans une variante, les deux positions ortho du groupe -O-Z sont non substituées. Dans une autre variante, au moins une position ortho et la position para du groupe -O-Z sont non substituées.

Avantageusement, dans la variante dans laquelle au moins une position ortho et la position para du groupe -O-Z sont non substituées, une unique position ortho est non substituée et la position para du groupe -O-Z est non substituée.

De préférence, quelle que soit la variante, les deux positions ortho du groupe -O-Z sont non substituées. On entend par là que les deux atomes de carbone situés de part et d'autre (en position ortho) de l'atome de carbone porteur du groupe -O-Z sont porteurs d'un simple atome d'hydrogène.

Encore plus préférentiellement, le reste du noyau aromatique est non substitué. On entend par là que les autres atomes de carbone du reste du noyau aromatique (ceux autres que les atomes de carbone porteur du groupe -O-Z) sont porteurs d'un simple atome d'hydrogène.

Dans un mode de réalisation, le dérivé du monophénol aromatique comprend plusieurs noyaux aromatiques à six chainons, au moins deux d'entre eux étant chacun porteur d'un unique du groupe -O-Z et, pour au moins un des du groupe -O-Z, les deux positions ortho du groupe -O-Z sont non substituées, ou au moins une position ortho et la position para du groupe -O-Z sont non substituées.

De préférence, les deux positions ortho de chaque groupe -O-Z d'au moins un noyau aromatique à six chainons sont non substituées.

Encore plus préférentiellement, les deux positions ortho de chaque groupe -O-Z de chaque noyau aromatique à six chainons sont non substituées.

Encore plus préférentiellement, le reste de chacun des noyaux aromatiques est non substitué. On entend par là que les autres atomes de carbone du reste de chaque noyau aromatique (ceux autres que les atomes de carbone porteurs du groupe -O-Z) sont porteurs d'un simple atome d'hydrogène.

Avantageusement, le ou chaque noyau aromatique du dérivé du monophénol aromatique est un noyau benzénique.

De préférence, le dérivé du monophénol aromatique est choisi dans le groupe constitué par un dérivé du phénol, un dérivé de l'ortho crésol, un dérivé du méta crésol, un dérivé du para crésol, un dérivé de l'ortho chlorophénol, un dérivé du méta chlorophénol, un dérivé du para chlorophénol, un dérivé de l'acide 2-hydroxybenzoïque, un dérivé de l'acide 3-hydroxybenzoïque, un dérivé de l'acide 4-hydroxybenzoïque, un dérivé du 4-vinylphénol, un dérivé du 4-éthylphénol, un dérivé du 4-isopropylphénol, un dérivé du 4-isobutylphénol, un dérivé de l'acide paracoumarique et les mélanges de ces composés.

Dans un mode de réalisation, le composé A22 comprend une résine pré-condensée à base du monophénol aromatique tel que décrit dans l'un quelconque de ces modes de réalisations, les fonctions hydroxyles de la résine pré-condensée restées réactives à l'issue de la condensation de la résine pré-condensée étant substituées par des groupes -O-Z.

Cette résine pré-condensée est avantageusement à base :
- d'au moins un monophénol aromatique tel que défini précédemment, et préférentiellement choisi dans le groupe constitué par le phénol, l'ortho crésol, le méta crésol, le para crésol, l'ortho chlorophénol, le méta chlorophénol, le para chlorophénol, l'acide 2-hydroxybenzoïque, l'acide 3-hydroxybenzoïque, l'acide 4-hydroxybenzoïque le 4-vinylphénol, le 4-éthylphénol, le 4-isopropylphénol, le 4-isobutylphénol, l'acide paracoumarique et les mélanges de ces composés ; et
- d'au moins un composé susceptible de réagir avec le monophénol comprenant au moins une fonction aldéhyde et/ou au moins un composé susceptible de réagir avec le monophénol comprenant au moins deux fonctions hydroxyméthyle portées par un noyau aromatique.

Le composé susceptible de réagir avec le monophénol comprenant au moins une fonction aldéhyde et/ou le composé susceptible de réagir avec le monophénol comprenant au moins deux fonctions hydroxyméthyle portées par un noyau aromatique peut être un composé aromatique A1 tel que défini précédemment au paragraphe I.1, un composé de formule Ar-(CHO)₂, où Ar est tel que défini précédemment pour le composé aromatique A1 du paragraphe I.1, ou tout autre aldéhyde. Avantageusement, ledit composé susceptible de réagir avec le monophénol comprenant au moins une fonction aldéhyde et/ou ledit composé susceptible de réagir avec le monophénol comprenant au moins deux fonctions hydroxyméthyle portées par un noyau aromatique est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le benzaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de monophénol aromatique, le motif répétitif comprend au moins un noyau aromatique à six chainons portant un unique groupe, ce groupe étant un radical -OH ou -O-Z, au moins un des atomes de carbone du noyau aromatique, qui était non substitué avant la condensation de la résine pré-condensée, étant relié à un autre motif.

Quel que soit le composé autre que le monophénol aromatique à la base de la résine pré-condensée, cette résine pré-condensée est dépourvue de formaldéhyde libre. En effet, même dans le cas où la résine pré-condensée est à base d'un monophénol aromatique tel que décrit précédemment et de formaldéhyde, le formaldéhyde ayant déjà réagi avec le monophénol aromatique, la résine pré-condensée est dépourvue de formaldéhyde libre susceptible de pouvoir réagir avec un composé A1 conforme à l'invention dans une étape ultérieure.

Le composé A22 peut également comprendre un mélange d'une molécule libre de dérivé de monophénol aromatique et d'une résine pré-condensée à base de monophénol aromatique, les fonctions hydroxyles de la résine pré-condensée restées réactives à l'issue de la condensation de la résine pré-condensée étant substituées par des groupes -O-Z. En particulier, le composé A22 peut également comprendre un mélange d'un dérivé du phénol et d'une résine pré-condensée à base de phénol, les fonctions hydroxyles de la résine pré-condensée restées réactives à l'issue de la condensation de la résine pré-condensée étant substituées par des groupes -O-Z.

Les définitions du groupe -O-Z qui suivent s'appliquent aussi bien au dérivé de polyphénol aromatique qu'au dérivé de monophénol aromatique.

Chaque groupe -O-Z est choisi dans le groupe constitué par les groupes -O-Si(R₇R₈R₉), -O-C((=O)(R₁₀)) et -O-C((=O)(N(R₁₁R₁₂))). Chaque groupe R₇, R₈, R₉ et R₁₀ représente, indépendamment l'un de l'autre, un radical hydrocarboné ou un radical hydrocarboné substitué. Chaque groupe R₁₁ et R₁₂ représente, indépendamment l'un de l'autre, l'hydrogène, un radical hydrocarboné ou un radical hydrocarboné substitué.

Avantageusement, en tant que groupe protecteur temporaire, chaque groupe -O-Z est dépourvu de fonction réactive vis-à-vis du composé aromatique A1. Dans les différents modes de réalisations décrits, chaque radical R₇, R₈, R₉, R₁₀, R₁₁ et R₁₂ est dépourvu de fonction réactive vis-à-vis du composé aromatique A1.

En tant que groupe protecteur temporaire, chaque groupe -O-Z est préférentiellement dépourvu de fonction réactive vis-à-vis des autres constituants de la composition de caoutchouc. Dans les différents modes de réalisations décrits, chaque radical R₇, R₈, R₉, R₁₀, R₁₁ et R₁₂ est préférentiellement dépourvu de fonction réactive vis-à-vis des autres constituants de la composition de caoutchouc.

Par fonction réactive, on entend ici une fonction qui réagirait dans des conditions réactionnelles nécessaires à la régénération du polyphénol aromatique et/ou du monophénol aromatique et dans des conditions réactionnelles nécessaires à la réticulation de la résine. Ainsi, chaque groupe -O-Z est dépourvu de fonction réactive vis-à-vis des fonctions aldéhyde et hydroxyméthyle. Dans les différents modes de réalisations décrits, chaque radical R₇, R₈, R₉, R₁₀, R₁₁ et R₁₂ est dépourvu de fonction réactive vis-à-vis des fonctions aldéhyde et hydroxyméthyle.

Dans un mode de réalisation, chaque groupe -O-Z représente un groupe -O-Si(R₇R₈R₉) avec R₇, R₈, R₉ représentant, indépendamment l'un de l'autre, un radical choisi dans le groupe constitué par les radicaux alkyle, aryle, arylalkyle, alkylaryle, cycloalkyle, alcényle. Préférentiellement, chaque groupe R₇, R₈, R₉ représente, indépendamment l'un de l'autre, un radical choisi dans le groupe constitué par les radicaux méthyle, éthyle, propyle, phényle, allyle, vinyle et encore plus préférentiellement un radical choisi dans le groupe constitué par les radicaux méthyle, éthyle, propyle, butyle, allyle, vinyle.

Dans les modes de réalisation qui précèdent, les radicaux propyle comprennent les radicaux de formule -C₃H₇. Ces radicaux sont le n-propyl et l'isopropyl.

Dans les modes de réalisation qui précèdent, les radicaux butyle comprennent les radicaux de formule -C₄H₉. Ces radicaux sont le n-butyl, isobutyl, le sec-butyl et le tert-butyl.

Dans les modes de réalisation qui précèdent, les radicaux aryle comprennent les noyaux aromatiques dont on a éliminé un atome d'hydrogène. Par exemple, le radical aryle est le radical C₆H₅ obtenu à partir du benzène C₆H₆. Un autre exemple de radical aryle est le radical C₄H₃O obtenu à partir du furane C₄H₄O.

Dans le mode de réalisation dans lequel chaque groupe -O-Z représente un groupe -O-Si(R₇R₈R₉), le dérivé du polyphénol aromatique peut être tel que R₇=R₈=R₉=CH₃ et présente la formule (1) suivante :

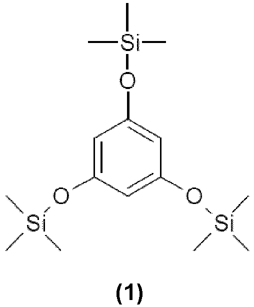

Le dérivé (1) est préparé à partir de phloroglucinol (CAS 108-73-6) et de chlorure de triméthylsilyle (CAS 75-77-4) en présence d'une base organique. Ainsi, par exemple, on dissout 40 g de phloroglucinol dans 800 mL de chloroforme. Puis, on ajoute ensuite 109 g de triéthylamine. Puis on ajoute au goutte-à-goutte 107 g de chlorure de triméthylsilyle CISi(CH₃)₃ au milieu réactionnel à température ambiante. On laisse le tout à température ambiante sous agitation pendant 3 heures. Puis, on acidifie le mélange réactionnel avec une solution aqueuse d'acide chlorhydrique à 37%. Puis, on réalise deux lavages à l'eau. Le produit final est finalement récupéré après séchage sur sulfate de sodium anhydre, filtration et évaporation du solvant. On obtient 150 g du dérivé (1) sous la forme d'un liquide brun. (RMN ¹H (CDCl₃, 300 MHz) : 6.03 (3H, s), 0.27 (27H, s)).

Dans le mode de réalisation dans lequel chaque groupe -O-Z représente un groupe -O-Si(R₇R₈R₉), le dérivé du polyphénol aromatique peut être tel que R₇=R₈=CH₃, R₉= CH=CH₂ et présente la formule (2) suivante :

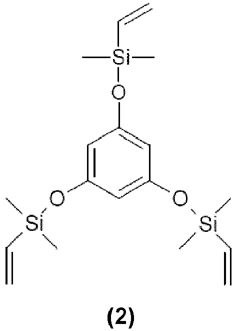

Le dérivé (2) est préparé d'une façon analogue au dérivé (**1**) à partir du phloroglucinol (CAS 108-73-6) et du chlorure de diméthylvinylsilyle (CAS 1719-58-0). (RMN ¹H(CDCl₃, 300 MHz): 6.15-5.60 (9H, m), 5.89 (3H, s), 0.15 (18H, s)).

Dans le mode de réalisation dans lequel chaque groupe -O-Z représente un groupe -O-Si(R₇R₈R₉), le dérivé du polyphénol aromatique peut être tel que R₇=CH₃, R₈=R₉=C₆H₆ et présente la formule (3) suivante :

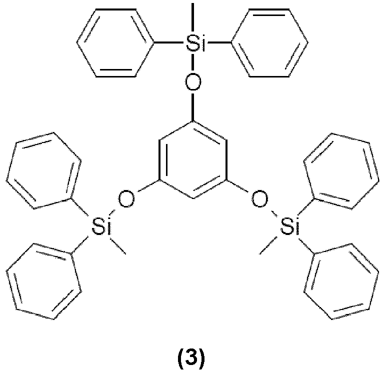

Le dérivé (3) est préparé d'une façon analogue au dérivé (1) à partir du phloroglucinol (CAS 108-73-6) et du chlorure de méthyldiphénylsilyle (CAS 144-79-6). (RMN ¹H (CDCl₃, 300 MHz) : 7.70-7.30 (30H, m), 6.03 (3H, s), 0.59 (9H, s)).

Dans un autre mode de réalisation, chaque groupe -O-Z représente un groupe -O-C((=O)(R₁₀)) avec R₁₀ représentant un radical choisi dans le groupe constitué par les radicaux alkyle, aryle, arylalkyle, alkylaryle, cycloalkyle, alcényle. Préférentiellement, R₁₀ représente un radical choisi dans le groupe constitué par les radicaux méthyle, éthyle, propyle, butyle, allyle, vinyle.

Dans ce mode de réalisation, le dérivé du polyphénol aromatique peut être tel que R₁₀=CH₃ et présente la formule (**4**) (CAS 2999-40-8) suivante :

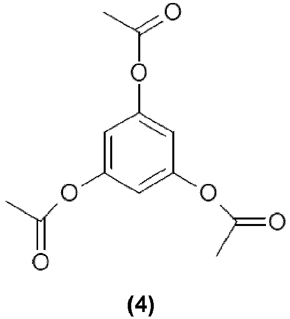

Le dérivé (**4**) est préparé à partir de phloroglucinol (CAS 108-73-6) et de chlorure d'acétyle (CAS 75-36-5) en présence d'une base organique. Ainsi, par exemple, on dissout 18 g de phloroglucinol, 64 g de triéthylamine dans 450 mL de tétrahydrofurane. Puis on ajoute au goutte-à-goutte 45 g de chlorure d'acétyle au milieu réactionnel à température ambiante. On laisse le tout à température ambiante sous agitation pendant 3 heures. Puis, le milieu réactionnel est filtré et le tétrahydrofurane évaporé. On dissout ensuite le produit dans le chloroforme et on réalise une extraction acide suivi d'une extraction à l'eau claire. Le produit final est finalement récupéré après séchage sur sulfate de sodium anhydre, filtration et évaporation du solvant. On obtient 36 g du dérivé sous la forme d'une poudre jaune. (RMN ¹H (CDCl₃, 300 MHz) : 6.85 (3H, s), 2.28 (9H, s)).

Dans ce mode de réalisation, le dérivé du polyphénol aromatique peut être tel que R₁₀=C₁₇H₃₅ et présente la formule (**5**) suivante :

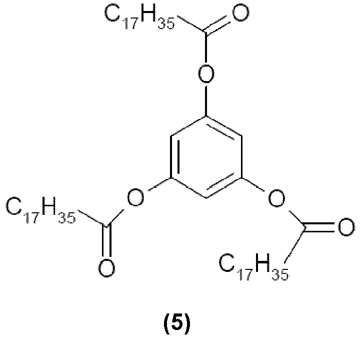

Le dérivé (**5**) est préparé d'une façon analogue au dérivé (**4**) à partir du phloroglucinol (CAS 108-73-6) et du chlorure de stearolyle (CAS 112-76-5). (RMN ¹H (CDCl₃, 300 MHz) : 6.84 (3H, s), 2.47 (6H, t), 1.87-1.16 (90H, m) 0.90 (9H, t)).

Dans ce mode de réalisation, le dérivé du polyphénol peut être tel que R₁₀=C₁₁H₂₃, et présente la formule (**6**) suivante :

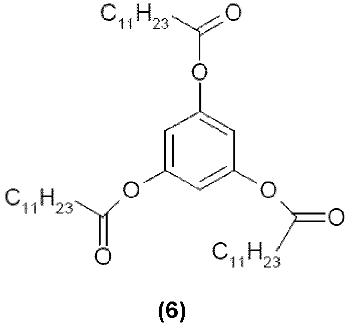

Le dérivé (**6**) est préparé d'une façon analogue au dérivé (**4**) à partir du phloroglucinol (CAS 108-73-6) et du chlorure de lauroyle (CAS 112-16-3). (RMN ¹H (CDCl₃, 300 MHz) : 6.83 (3H, s), 2.54 (6H, t), 1.84-1.62 (6H, m), 1.28 (48H, m), 0.90 (9H, t)).

Dans encore un autre mode de réalisation, chaque groupe -O-Z représente un groupe -O-C((=O)(N(R₁₁R₁₂))) avec R₁₁, R₁₂ représentant, indépendamment l'un de l'autre, un radical choisi dans le groupe constitué par les radicaux alkyle, aryle, arylalkyle, alkylaryle, cycloalkyle, alcényle et l'hydrogène. Préférentiellement, chaque groupe R₁₁, R₁₂ représente, indépendamment l'un de l'autre, un radical choisi dans le groupe constitué par les radicaux méthyle, éthyle, propyle, butyle, allyle, vinyle et l'hydrogène.

Dans ce mode de réalisation, le dérivé du polyphénol aromatique peut être tel que R₁₁=H et R₁₂=C₆H₆ et présente la formule (**7**) suivante :

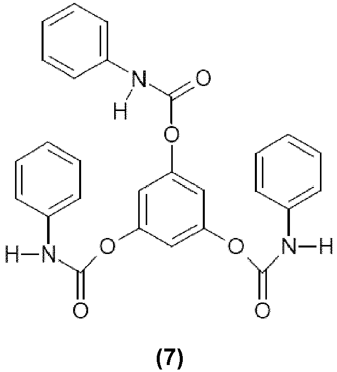

Le dérivé (**7**) est préparé à partir de phloroglucinol (CAS 108-73-6) et d'isocyanate de phényle (CAS 103-71-9). Dans un ballon bicol sont introduits 5 g (0.040 mol) de phloroglucinol et 30 ml de dioxane. Le mélange est placé sous agitation à température ambiante puis on additionne par une ampoule de coulée 14.18 g (0.119 mol.) d'isocyanate de phényle. A l'issue de l'addition, on ajoute 200 mg de dilaurate de dibutyl étain. On élève la température à 80°C pour une durée de 8 h. A l'issue de la réaction, on évapore le dioxane sous pression réduite puis on sèche le produit final dans une étuve sous vide. Le produit final est une poudre blanche obtenu avec un rendement de 94%. (RMN ¹H (DMSO-d6, 300 MHz) : 7.00-6.05 (15H, m), 6.24 (3H, s)).

### Composition de caoutchouc selon l'invention

Dans certains modes de réalisation, en fonction de l'utilisation de la composition, on utilisera une quantité de composé aromatique A1 allant de 0,1 à 30 pce. De même, on utilisera une quantité de de dérivé composé phénolique A2 allant de 0,1 à 30 pce.

Dans certains modes de réalisation, le ratio molaire [composé aromatique A1] :[dérivé de composé phénolique A2] varie avantageusement de 3:1 à 1:1, avantageusement de 3 :1 à 1,5 :1.

Selon l'utilisation que l'on fait de la composition, la composition de caoutchouc présente, à l'état cuit, un module sécant à 10% d'allongement MA10 mesuré selon la norme ASTM D 412 de 1998 (éprouvette C) supérieur ou égal à 10 MPa, de préférence à 20 MPa, préférentiellement à 30 MPa, plus préférentiellement à 40 MPa et encore plus préférentiellement à 60 MPa.

De préférence, la composition de caoutchouc comprend un élastomère diénique.

Par élastomère ou caoutchouc (les deux termes étant synonymes) du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les compositions de caoutchouc peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

De préférence, la composition de caoutchouc comprend une charge renforçante.

Lorsqu'une charge renforçante est utilisée, on peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM).

Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de micro-perles, de granules, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogenée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Evonik, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que de la silice, ou bien comporterait à sa surface des sites fonctionnels, notamment hydroxyle, nécessitant l'utilisation d'un agent de couplage pour établir la liaison entre la charge et l'élastomère.

De préférence, le taux de charge renforçante totale (noir de carbone et/ou charge inorganique renforçante telle que silice) est compris dans un domaine allant de 5 à 120 pce, plus préférentiellement de 5 à 100 pce et encore plus préférentiellement de 5 à 90 pce.

Préférentiellement, le taux de charge renforçante totale est compris dans un domaine allant de 10 à 120 pce, plus préférentiellement de 10 à 100 pce et encore plus préférentiellement de 10 à 90 pce.

Plus préférentiellement, le taux de charge renforçante totale est compris dans un domaine allant de 20 à 120 pce, plus préférentiellement de 20 à 100 pce et encore plus préférentiellement de 20 à 90 pce.

Encore plus préférentiellement, le taux de charge renforçante totale est compris dans un domaine allant de 30 à 120 pce, plus préférentiellement de 30 à 100 pce et encore plus préférentiellement de 30 à 90 pce.

Le noir de carbone peut avantageusement constituer la seule charge renforçante ou la charge renforçante majoritaire. Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice.

Lorsqu'une charge inorganique (par exemple de la silice) est utilisée dans la composition de caoutchouc, seule ou en coupage avec du noir de carbone, son taux est compris dans un domaine de 0 à 70 pce, préférentiellement de 0 à 50 pce, en particulier également de 5 à 70 pce, et encore plus préférentiellement cette proportion varie de 5 à 50 pce, particulièrement de 5 à 40 pce.

De préférence, la composition de caoutchouc comprend des additifs divers.

Les compositions de caoutchouc peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue ou bien encore des promoteurs d'adhésion.

De préférence, la composition de caoutchouc comprend un système de réticulation, plus préférentiellement de vulcanisation.

Le système de vulcanisation, comprend un agent donneur de soufre, par exemple du soufre.

De préférence, le système de vulcanisation comprend des activateurs de vulcanisation tels que l'oxyde de zinc et l'acide stéarique.

De préférence, le système de vulcanisation comprend un accélérateur de vulcanisation et/ou un retardateur de vulcanisation.

Le soufre ou agent donneur de soufre est utilisé à un taux préférentiel compris dans un domaine de 0,5 à 10 pce, plus préférentiellement compris dans un domaine de 0,5 à 8,0 pce. L'ensemble des accélérateurs, retardateurs et activateurs de vulcanisation est utilisé à un taux préférentiel compris dans un domaine de 0,5 à 15 pce. Le ou les activateurs de vulcanisation est ou sont utilisés à un taux préférentiel compris dans un domaine de 0,5 et 12 pce.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, divers accélérateurs secondaires ou activateurs de vulcanisation connus tels qu'oxyde de zinc, acide stéarique, dérivés guanidiques (en particulier diphenylguanidine), etc.

On peut utiliser comme accélérateur (primaire ou secondaire) tout composé susceptible d'agir comme accélérateur de vulcanisation des élastomères diéniques en présence de soufre, notamment des accélérateurs du type thiazole ainsi que leurs dérivés, des accélérateurs de type thiurame, et de type dithiocarbamate de zinc. Ces accélérateurs sont plus préférentiellement choisis dans le groupe constitue par le disulfure de 2-mercaptobenzothiazyle (en abrégé "MBTS"), N-cyclohexyl-2-benzothiazyle sulfénamide (en abrégé "CBS"), N,N-dicyclohexyl- 2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Dans un mode de réalisation, la composition de caoutchouc se trouve à l'état cuit, c'est-à-dire vulcanisée. Dans d'autres modes de réalisation, la composition se trouve à l'état cru, c'est-à-dire non vulcanisée, la résine réticulée ayant été ajoutée ultérieurement à la composition non vulcanisée.

Dans certains modes de réalisation, la composition comprend un résidu obtenu à partir du radical -Z de chaque groupe -O-Z. Préalablement à la réticulation de la résine, et comme supposé par les inventeurs à l'origine de l'invention, après formation de chaque fonction hydroxyle, chaque radical Z de chaque groupe -O-Z peut permettre d'obtenir un résidu généré in-situ. Certains résidus restent définitivement dans la composition et, le cas échéant, peuvent être utilisés pour certaines de leurs propriétés.

Dans d'autres modes de réalisation, le résidu généré ne reste que temporairement dans la composition soit parce qu'il en sort spontanément dans les conditions de fabrication de la composition, par exemple sous la forme de gaz, notamment dans le cas où le résidu est volatil, soit parce qu'on met en œuvre une étape optionnelle d'extraction de ce résidu dans le procédé de fabrication de la composition.

Dans un mode de réalisation, la résine n'ayant pas encore réticulé, la composition de caoutchouc comprend :
A1) au moins un composé aromatique issu de la réaction entre un réactif de formule α) 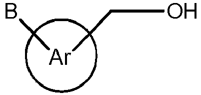 où B représente CHO ou CH₂OH
   (α)
   et un réactif de formule β) ou γ) :

   H₂N-R₁ (β)

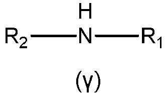

   et les mélanges de ces composés, dans lesquelles :
   - Ar représente un noyau aromatique, éventuellement substitué,
   - chaque radical R₁, R₂ représente, indépendamment l'un de l'autre, un radical monovalent hydrocarboné ou un radical monovalent hydrocarboné substitué ;
      et
A2) au moins un dérivé d'un composé phénolique choisi parmi :
   A21) au moins un dérivé d'un polyphénol aromatique comprenant au moins un noyau aromatique porteur d'au moins deux groupes -O-Z en position méta l'une par rapport à l'autre, les deux positions ortho d'au moins un des groupes -O-Z étant non substituées, Z étant différent de l'hydrogène ;
   A22) au moins un dérivé d'un monophénol aromatique comprenant au moins un noyau aromatique à six chainons portant un unique groupe -O-Z, Z étant différent de l'hydrogène
      - les deux positions ortho du groupe -O-Z étant non substituées ou
      - au moins une position ortho et la position para du groupe -O-Z étant non substituées,
      et leurs mélanges,
      chaque groupe -O-Z étant choisi dans le groupe constitué par les groupes -O-Si(R₇R₈R₉), -O-C((=O)(R₁₀)), -O-C((=O)(N(R₁₁R₁₂))), chaque groupe R₇, R₈, R₉ et R₁₀ représente, indépendamment l'un de l'autre, un radical hydrocarboné ou un radical hydrocarboné substitué, chaque groupe R₁₁ et R₁₂ représente, indépendamment l'un de l'autre, l'hydrogène, un radical hydrocarboné ou un radical hydrocarboné substitué.

De préférence, dans ce mode de réalisation, la composition est à l'état cru, c'est-à-dire non vulcanisée.

De préférence, la composition de caoutchouc peut être utilisée dans le pneumatique sous la forme d'une couche. Par couche, on entend tout élément tridimensionnel, de forme et d'épaisseur quelconques, notamment en feuille, bande ou autre élément de section droite quelconque, par exemple rectangulaire ou triangulaire.

Bien entendu, toutes les caractéristiques relatives au dérivé du composé phénolique et au composé de la composition comprenant la résine s'appliquent également à la composition comprenant le dérivé du composé phénolique et le composé aromatique non réticulés à l'état de résine.

### Composite de caoutchouc selon l'invention

Le composite de caoutchouc est renforcé d'au moins un élément de renfort noyé dans la composition de caoutchouc selon l'invention.

Ce composite de caoutchouc peut être préparé selon un procédé comportant au moins les étapes suivantes :
- au cours d'une première étape, combiner au moins un élément de renfort avec une composition de caoutchouc (ou élastomère, les deux termes sont synonymes) selon l'invention pour former un composite de caoutchouc renforcé de l'élément de renfort;
- puis, au cours d'une deuxième étape, réticuler par cuisson, par exemple par vulcanisation, de préférence sous pression, le composite ainsi formé.

Parmi les éléments de renforts, on pourra citer les éléments de renfort textiles, métalliques ou hybrides textile-métal.

Par textile, on entend, de manière bien connue de l'homme du métier, tout matériau en matière autre que métallique, qu'elle soit naturelle comme synthétique, susceptible d'être transformée en fil, fibre par tout procédé de transformation approprié. On peut citer par exemple, sans que les exemples ci-après soient limitatifs, un procédé de filage de polymère tel que par exemple filage au fondu, filage en solution ou filage de gel.

Ce matériau textile peut consister en un fil ou fibre ou également en un tissu réalisé à partir de fils ou fibres, par exemple d'un tissu tramé avec fils de chaîne et fils de trame, ou encore d'un tissu croisé avec fils croisés.

De préférence, ce matériau textile de l'invention est choisi dans le groupe constitué par les monofilaments (ou fils unitaires), les fibres multifilamentaires, les assemblages de tels fils ou fibres, et les mélanges de tels matériaux. Il s'agit plus particulièrement d'un monofilament, d'une fibre multifilamentaire ou d'un retors.

Par fil ou fibre, on entend de manière générale tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. La plus grande dimension de sa section transversale est préférentiellement inférieure à 5 mm, plus préférentiellement inférieur à 3 mm.

Ce fil ou cette fibre peut prendre tout forme connue, il peut s'agir par exemple d'un monofilament élémentaire de diamètre important (par exemple et de préférence égal ou supérieur à 50 µm), d'une fibre multifilamentaire (constituée d'une pluralité de filaments élémentaires de faible diamètre, typiquement inférieur à 30 µm), d'un retors ou câblé textile formé de plusieurs fibres ou monofilaments textiles retordus ou câblés ensemble, ou encore d'un assemblage, un groupe, une rangée de fils ou fibres tels que par exemple une bande ou bandelette comportant plusieurs de ces monofilaments, fibres, retors ou câblés regroupés ensemble, par exemple alignés selon une direction principale, rectiligne ou pas.

Les matériaux textiles peuvent être en matière organique ou polymérique, comme en matière inorganique.

A titre d'exemples de matières inorganiques, on citera le verre, le carbone.

L'invention est préférentiellement mise en œuvre avec des matériaux en matière polymérique, du type thermoplastique comme non thermoplastique.

A titre d'exemples de matières polymériques du type non thermoplastique, on citera par exemple l'aramide (polyamide aromatique) et la cellulose, naturelle comme artificielle, telle que le coton, la rayonne, le lin, le chanvre.

A titre d'exemples de matières polymériques du type thermoplastiques, on citera préférentiellement les polyamides aliphatiques et les polyesters. Parmi les polyamides aliphatiques, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Par métallique, on entend par définition un ou des éléments filaires constitués majoritairement (c'est-à-dire pour plus de 50% de sa masse) ou intégralement (pour 100% de sa masse) d'un matériau métallique. De préférence, le matériau métallique est l'acier, plus préférentiellement en acier perlitique (ou ferrito-perlitique) au carbone comprenant avantageusement entre 0,4% et 1,2% en masse de carbone.

L'élément de renfort métallique peut être un monofilament, un câble comprenant plusieurs monofilaments métalliques ou un câble multi-torons comprenant plusieurs câbles alors appelés torons.

Dans le cas préféré où l'élément de renfort comprend plusieurs monofilaments métalliques ou plusieurs torons, les monofilaments métalliques ou les torons sont assemblés par retordage ou par câblage. On rappelle qu'il existe deux techniques possibles d'assemblage:
- soit par retordage : les monofilaments métalliques ou les torons subissent à la fois une torsion collective et une torsion individuelle autour de leur propre axe, ce qui génère un couple de détorsion sur chacun des monofilaments ou torons ;
- soit par câblage: les monofilaments métalliques ou les torons ne subissent qu'une torsion collective et ne subissent pas de torsion individuelle autour de leur propre axe.

De façon optionnelle, l'élément de renfort comprend plusieurs monofilaments et est du type gommé in situ, c'est-à-dire que l'élément de renfort est gommé de l'intérieur, pendant sa fabrication même par une gomme de remplissage. De tels éléments filaires métalliques sont connus de l'homme du métier. La composition de la gomme de remplissage peut être identique ou non à la composition de caoutchouc dans laquelle l'élément de renfort est noyé.

Chaque élément de renfort, lorsqu'il est textile, est de préférence revêtu d'une couche d'une composition adhésive ou colle. La colle utilisée est par exemple du type RFL (Résorcinol-Formaldéhyde-Latex) ou par exemple, telle que décrite dans les publications WO2013017421, WO2013017422, WO2013017423 ou encore WO2015007642. Ainsi, la composition de caoutchouc selon l'invention est au contact direct de la composition adhésive. La composition adhésive est interposée entre la composition de caoutchouc selon l'invention et l'élément de renfort.

### Pneumatique selon l'invention

De tels pneumatiques sont par exemple ceux destinés à équiper des véhicules à moteur de type tourisme, SUV (*"Sport Utility Vehicles"*)*,* deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

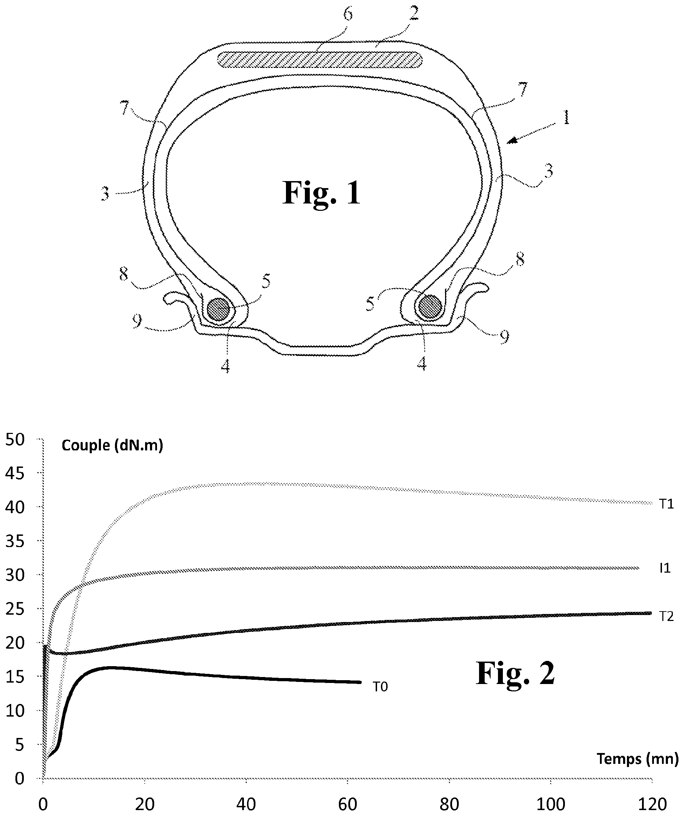

A titre d'exemple, la figure 1 annexée représente de manière très schématique (sans respect d'une échelle spécifique), une coupe radiale d'un pneumatique conforme à l'invention pour véhicule du type poids lourd.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique qu'au moins une armature de sommet 6 et/ou son armature de carcasse 7 comporte une composition de caoutchouc ou un composite selon l'invention. Bien entendu, l'invention concerne les objets précédemment décrits, à savoir le composite en caoutchouc et le pneumatique, tant à l'état cru (avant cuisson ou vulcanisation) qu'à l'état cuit (après cuisson).

### Procédé de fabrication du composé α

La réaction entre le réactif de formule α et le réactif de formule β et/ou γ est réalisée dans un solvant polaire. De préférence, le solvant est choisi dans le groupe constitué par le tétrahydrofurane, l'éther et l'eau et plus préférentiellement le solvant est l'eau. L'eau est particulièrement avantageuse car d'une part, elle est non-réactive vis-à-vis des réactifs α, β et γ et permet de solubiliser ces réactifs et, d'autre part, permet d'extraire facilement le composé selon l'invention qui n'y est pas ou très peu soluble. En outre, en réalisant la réaction dans l'eau dans laquelle le composé n'est pas ou très peu soluble, il y précipite et ne peut donc être hydrolysé pour redonner les réactifs α, β et/ou γ de départ.

Dans un mode de réalisation, on réalise la réaction avec un excès molaire de réactif β et/ou γ par rapport au réactif α. Par excès molaire, on entend qu'une fois la réaction réalisée, il reste au moins 10% de la quantité molaire initiale du réactif β et/ou γ dans le milieu réactionnel.

Dans un mode de réalisation dans lequel le composé précipite dans le milieu réactionnel, afin de laver le composé, on lave le composé avec de l'eau, de préférence avec de l'eau présentant une température supérieure à la température ambiante. On utilisera une température suffisamment élevée pour favoriser la solubilisation de l'excès éventuel du réactif β et/ou γ et des autres impuretés, par exemple à une température supérieure à 50°C.

### Procédé de fabrication de la composition selon l'invention

Le procédé de fabrication décrit précédemment et ci-après permet de fabriquer la composition selon l'invention.

La composition de caoutchouc peut être fabriquée dans des mélangeurs appropriés, en utilisant deux phases de préparation successives bien connues de l'homme du métier :
- une première phase de travail ou malaxage thermomécanique (phase dite "non-productive") à haute température, jusqu'à une température maximale comprise entre 110°C et 190°C, de préférence entre 130°C et 180°C,
- suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Dans un mode de réalisation, le procédé comporte les étapes suivantes :
- incorporer à un élastomère diénique, au cours d'une première étape (dite "non-productive"), une charge renforçante, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation, le composé aromatique A1 et le dérivé de composé phénolique A2 ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (un élastomère diénique, charge renforçante,), puis dans un deuxième temps, par exemple après une à deux minutes de malaxage, les autres additifs, éventuels agents de recouvrement de la charge ou de mise en œuvre complémentaires, à l'exception du système de réticulation. La durée totale du malaxage, dans cette phase non-productive, est de préférence comprise entre 1 et 15 min.

Apres refroidissement du mélange ainsi obtenu, on incorpore alors dans un mélangeur externe tel qu'un mélangeur à cylindres, maintenu à basse température (par exemple entre 40°C et 100°C), le système de réticulation, le composé aromatique A1 et le dérivé de composé phénolique A2. L'ensemble est alors mélangé (phase productive) pendant quelques minutes, par exemple entre 2 et 15 min.

La composition finale ainsi obtenue à l'état cru peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

Puis, après une éventuelle étape d'assemblage entre elles de plusieurs compositions mises en forme de nappes ou de bandes sous la forme d'un composite ou d'une ébauche crue de pneumatique, on procède à une étape de réticulation, par exemple une étape de vulcanisation ou cuisson de la composition, du composite ou de l'ébauche durant laquelle on réticule la résine à base du composé aromatique et du polyphénol aromatique. On réalise l'étape de réticulation, ici de vulcanisation ou cuisson, à une température supérieure ou égale à 120°C, de préférence supérieure ou égale à 140°C. On obtient la composition à l'état cuit.

Dans un autre mode de réalisation, le procédé comporte les étapes suivantes :
- incorporer à un élastomère, au cours d'une première étape, une charge renforçante le dérivé de composé phénolique A2 et le composé aromatique A1, en malaxant thermomécaniquement le tout, jusqu'à atteindre une température maximale comprise entre 110°C et 190°C ;
- refroidir l'ensemble à une température inférieure à 110°C ;
- incorporer ensuite, au cours d'une seconde étape, un système de réticulation;
- malaxer le tout à une température inférieure à 110°C.

L'invention ainsi que ses avantages seront aisément compris à la lumière des exemples de réalisation qui suivent.

### Exemples de réalisation de l'invention et essais comparatifs

Ces essais démontrent que :
- la rigidité des compositions de caoutchouc selon l'invention est largement augmentée par rapport à une composition de caoutchouc dépourvue de résine renforçante (composition T0),
- la rigidité de la composition de caoutchouc est au moins équivalente par rapport à une composition de caoutchouc utilisant une résine renforçante classique à base d'un accepteur de méthylene avec l'HMT ou l'H3M en tant que donneur de méthylène (composition T1),
- la rigidité de la composition de caoutchouc selon l'invention aux températures élevées, en particulier pour des températures allant jusqu'à 150°C, est améliorée par rapport à une composition de caoutchouc dépourvue de résine renforçante (composition T0). Elle peut également être améliorée par rapport à une composition de caoutchouc utilisant une résine renforçante à base du composé phénolique correspondant et du composé aromatique correspondant α (composition T2),
- il existe une phase retard lors de la réticulation de la résine de la composition selon l'invention permettant d'éviter la réticulation précoce de la résine par rapport à une résine réticulée directement à partir du polyphénol aromatique correspondant et du composé aromatique a,
- la résine de la composition selon l'invention est dépourvue de formaldéhyde et n'en génère pas lors de sa formation.

Pour cela, plusieurs compositions de caoutchouc, notées ci-après T0 à T2, I1 et I2 ont été préparées comme indiqué précédemment et sont rassemblées dans le tableau 1 annexé ci-après.

Toutes les compositions T0 à T2, I1 et I2 ont une partie commune dans leurs formulations (exprimées en pce, parties en poids pour cent parties d'élastomère): 100 pce de caoutchouc naturel, 75 pce de noir de carbone N326, 1,5 pce de N-1, 3-diméthylbutyl-N-phényl-para-phénylènediamine, 1,5 pce d'acide stéarique, 5 pce de ZnO, 1 pce de N-tertiarybutyl-2-benzothiazole sulfamide et 2,5 pce de soufre insoluble 20H.

La composition T0 ne comprend aucune résine renforçante ajoutée à cette partie commune.

En plus de la partie commune, la composition T1 comprend une résine renforçante à base d'hexa-méthylènetétramine (1,6 pce) et d'une résine phénolique pré-condensée (4 pce). La composition T1 représente une composition classique de l'état de la technique présentant une rigidité supérieure à celle de la composition T0.

En plus de la partie commune, la composition T2 comprend 14 pce de polyphénol aromatique, ici le phloroglucinol, et 14 pce de 5-(hydroxyméthyl)-furfural.

En plus de la partie commune, la composition I1 comprend 14 pce de dérivé de polyphénol aromatique A21 et 8,75 pce d'un composé aromatique A1, ici le composé aromatique C1, issu de la réaction entre le 5-(hydroxyméthyl)-furfural et la hexane-1,6-diamine.

En plus de la partie commune, la composition I2 comprend 14 pce de dérivé de polyphénol aromatique A21 et 11,85 pce d'un composé aromatique A1, ici le composé aromatique C1, issu de la réaction entre le 5-(hydroxyméthyl)-furfural et la hexane-1,6-diamine.

Les compositions T0 à T2 ne sont pas conformes à l'invention contrairement aux compositions I1 et I2 qui sont conformes à l'invention.

A l'état cru, la composition de caoutchouc T2, non conforme à l'invention, comprend:
- au moins un aldéhyde aromatique, le 5-(hydroxyméthyl)-furfural, et
- au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées.

A l'état cuit, la composition de caoutchouc T2, non conforme à l'invention, comprend une résine phénol-aldéhyde à base :
- d'au moins un aldéhyde aromatique, le 5-(hydroxyméthyl)-furfural, et
- d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées.

A l'état cru, chaque composition de caoutchouc I1 et I2 selon l'invention comprend:
- au moins un composé aromatique, ici le composé C1, issu de la réaction entre un réactif α comprenant au moins un noyau aromatique porteur d'au moins deux fonctions, l'une de ces fonctions étant une fonction hydroxyméthyle, l'autre étant une fonction aldéhyde ou une fonction hydroxyméthyle et un réactif de formule β et/ou γ : H₂N-R₁ (β) ; 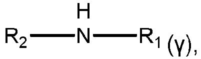 et les mélanges de ces composés, dans lesquelles chaque radical R₁, R₂ représente, indépendamment l'un de l'autre, un radical monovalent hydrocarboné ou un radical monovalent hydrocarboné substitué; et
- au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées.

A l'état cuit, chaque composition de caoutchouc I1 et I2 selon l'invention comprend une résine à base :
- d'au moins un composé aromatique, ici le composé C1, issu de la réaction entre un réactif α comprenant au moins un noyau aromatique porteur d'au moins deux fonctions, l'une de ces fonctions étant une fonction hydroxyméthyle, l'autre étant une fonction aldéhyde ou une fonction hydroxyméthyle et un réactif de formule β et/ou γ : H₂N-R₁ (β) ; 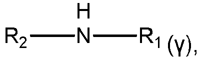 et les mélanges de ces composés, dans lesquelles chaque radical R1, R2 représente, indépendamment l'un de l'autre, un radical monovalent hydrocarboné ou un radical monovalent hydrocarboné substitué; et
- d'au moins un dérivé d'un polyphénol aromatique comprenant au moins un noyau aromatique porteur d'au moins deux groupes -O-Z en position méta l'une par rapport à l'autre, les deux positions ortho d'au moins un des groupes -O-Z étant non substituées.

Le polyphénol aromatique de la résine de la composition T2 est choisi dans le groupe constitué par le résorcinol, le phloroglucinol, le 2,2',4,4'-tétrahydroxydiphényl sulfide, la 2,2',4,4'-tétrahydroxybenzophenone, les résines pré-condensées à partir de ces phénols et les mélanges de ces composés phénoliques. Le composé phénolique de la composition T2 comprend un unique noyau aromatique, ici benzénique, porteur de trois, et seulement trois, fonctions hydroxyle en position méta l'une par rapport à l'autre. En l'espèce, il s'agit du phloroglucinol.

Pour le polyphénol aromatique de la composition T2, le reste du noyau aromatique du polyphénol aromatique est non substitué. En particulier, les deux positions ortho de chaque fonction hydroxyle sont non substituées.

### Dérivés de polyphénol aromatique des compositions I1 et I2

Chaque dérivé de polyphénol aromatique de la résine de chaque composition I1 et I2 selon l'invention est choisi dans le groupe constitué par les dérivés du résorcinol, du phloroglucinol, du 2,2',4,4'-tétrahydroxydiphényl sulfide, du 2,2',4,4'-tétrahydroxybenzophénone et les mélanges de ces composés.

Chaque dérivé de polyphénol aromatique de chaque composition I1 et I2 selon l'invention comprend un unique noyau aromatique, ici benzénique, porteur de trois, et seulement trois, groupes -O-Z en position méta l'un par rapport à l'autre.

Pour les dérivés des polyphénols aromatiques de chaque composition selon l'invention I1 et I2, le reste du noyau aromatique du dérivé du polyphénol aromatique est non substitué. En particulier, les deux positions ortho de chaque groupe -O-Z sont non substituées. En l'espèce, il s'agit de dérivés du phloroglucinol.

Chaque dérivé de polyphénol aromatique de chaque composition I1 à I2 selon l'invention présente un groupe -O-Z choisi dans le groupe constitué par les groupes -O-Si(R₇R₈R₉), -O-C((=O)(R₁₀)), -O-C((=O)(N(R₁₁R₁₂))) dans lesquels chaque groupe R₇, R₈, R₉ et R₁₀ représente, indépendamment l'un de l'autre, un radical hydrocarboné ou un radical hydrocarboné substitué et dans lesquels chaque groupe R₁₁ et R₁₂ représente, indépendamment l'un de l'autre, l'hydrogène, un radical hydrocarboné ou un radical hydrocarboné substitué.

### Dérivé de polyphénol aromatique de la composition I1

Le dérivé du polyphénol aromatique de la composition I1 est tel que R₇=R₈=R₉=CH₃ et présente la formule (1) suivante :

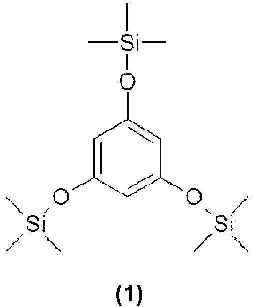

Le dérivé (1) est préparé en suivant le protocole décrit précédemment dans la description.

### Dérivé de polyphénol aromatique de la composition 12

Le dérivé du polyphénol aromatique de la composition I2 est tel que R₁₀=CH₃ et présente la formule (4) (CAS 2999-40-8) suivante :

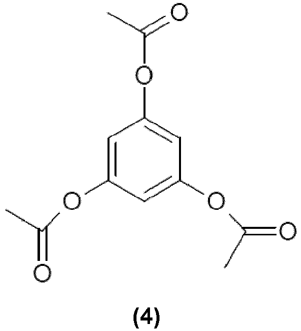

Le dérivé (4) est préparé en suivant le protocole décrit dans la description.

### Composé aromatique des compositions I1 et I2

Comme indiqué ci-dessus, le composé aromatique C1 de chaque composition I1 et I2 selon l'invention résulte de la réaction entre le 5-(hydroxyméthyl)-furfural α1 et la hexane-1,6-diamine β1.

Comme expliqué précédemment, pour un composé a1 qui est le 5-(hydroxyméthyl)-furfural, le composé issu de la réaction entre les réactifs de formule α et β et/ou γ est choisi dans le groupe constitué par les composés de formule suivante :

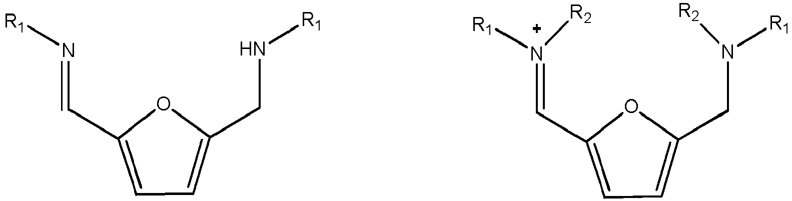

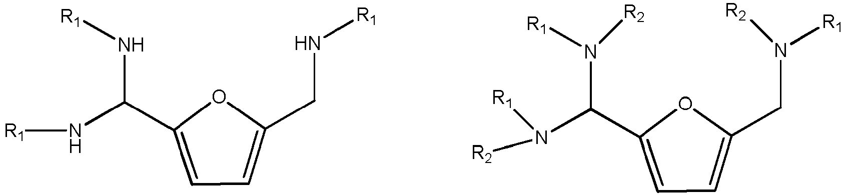

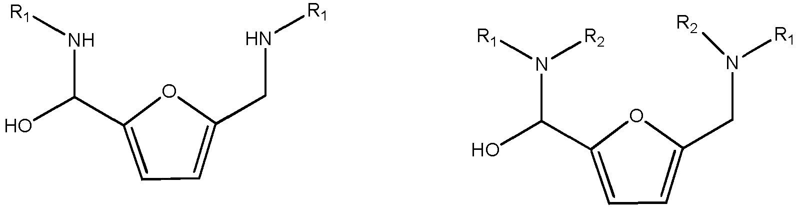

L'autre réactif réagissant avec le réactif α1) est un réactif de formule **β** :

H₂N-R₆

dans lequel R₆ représente un radical monovalent choisi dans le groupe constitué par les radicaux alkyl, aryl, AL-NH₂ avec AL représentant un radical monovalent alkyl, AR-NH₂ avec AR représentant un radical monovalent aryl, AL-NR₂H avec AL représentant un radical monovalent alkyl et AR-NR₂H avec AR représentant un radical monovalent aryl. En l'espèce, R1 représente un radical AL-NH₂ avec AL représentant un radical monovalent alkyl, en l'espèce un radical hexyl. Le réactif présente la formule **β1** suivante :

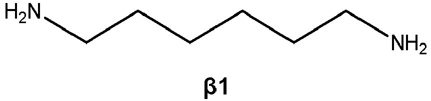

Le réactif de formule **β1** est la hexane-1,6-diamine.

Du fait de la présence de deux groupes -NH₂ sur le réactif de formule **β1**, les produits de la réaction sont nombreux.

Par exemple, le composé C1 est préparé à partir du 5-(hydroxyméthyl)-furfural (CAS 67-47-0) et de la hexane-1,6-diamine (CAS 124-09-4) dans un solvant polaire. Ainsi, par exemple, on dissout 20 g de hexane-1,6-diamine dans 250 mL d'eau. Puis, on ajoute ensuite 16,1 g de 5-(hydroxyméthyl)-furfural. On mélange le tout à 50°C pendant 4 heures sous agitation jusqu'à précipitation du composé C1. Puis, on filtre le mélange réactionnel et on le lave 5 fois consécutivement avec 100 mL d'eau à 20°C afin de retirer les résidus de la hexane-1,6-diamine et de 5-(hydroxyméthyl)-furfural. Le produit final est finalement récupéré puis séché dans une étuve pendant 48H à 70°C. On obtient 20 g du composé C1 sous la forme d'une poudre beige.

### Procédé de préparation

Dans une première étape, on a incorporé à un élastomère la charge renforçante, en malaxant thermomécaniquement le tout, jusqu'à atteindre une température maximale comprise entre 110°C et 190°C. Puis on a refroidit l'ensemble à une température inférieure à 110°C. Ensuite, on a incorporé, au cours d'une seconde étape, le système de réticulation, le polyphénol aromatique sous forme de résine pré-condensée et le donneur de méthylène (T1) ou le polyphénol aromatique et le 5-(hydroxyméthyl)-furfural (T2) ou le dérivé de polyphénol aromatique et le composé aromatique C1 (11, 12). A l'issue de cette seconde étape, on a chauffé le mélange à 150°C jusqu'à l'obtention du couple rhéométrique maximum afin de vulcaniser la composition et réticuler la résine. Puis, on a réalisé une caractérisation de la rigidité à 23°C de la composition lors d'un essai en traction.

### Caractérisation de la phase retard et de la rigidité à haute température - Couple rhéométrique maximum

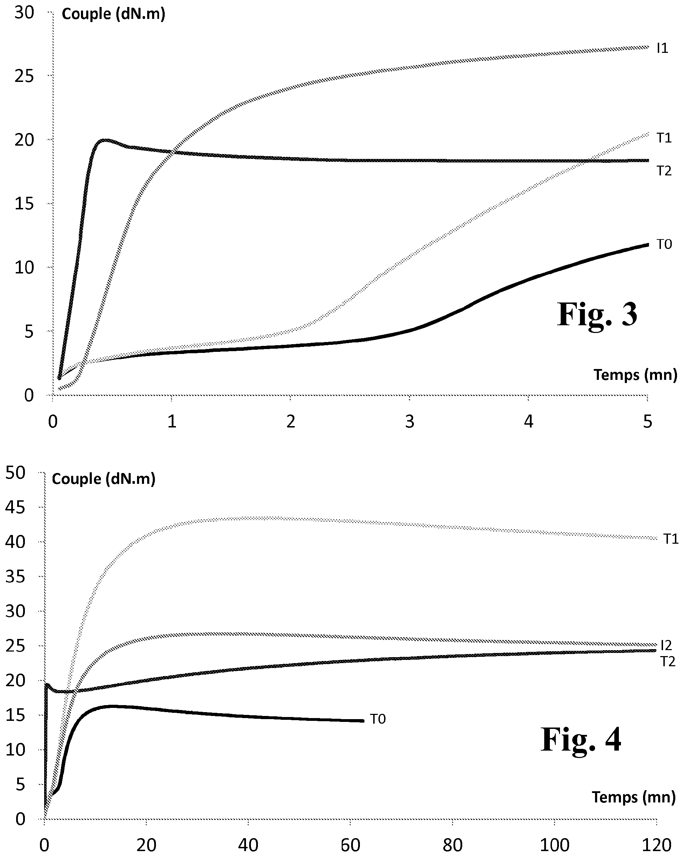

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la vulcanisation et de la réticulation de la résine De l'évolution du couple rhéométrique, on détermine la présence d'une phase retard lorsque l'augmentation du couple rhéométrique sur 1 minute de la composition testée est inférieure à l'augmentation du couple rhéométrique sur 1 minute d'une composition témoin comprenant le polyphénol aromatique correspondant et le composé a, ici la composition T2. On a représenté sur les figures 2 (sur une échelle de temps de 120 minutes) et 3 (sur une échelle de temps limitée à 5 minutes) chaque courbe représentant l'évolution du couple rhéométrique de la composition I1 et de chaque composition T0 à T2. On a représenté sur la figure 4 chaque courbe représentant l'évolution du couple rhéométrique de la composition I2 et de chaque composition T0 à T2.

Plus le couple rhéométrique maximum Cmax est élevé, plus la composition présente une rigidité pouvant être maintenue à haute température.

### Caractérisation de la rigidité à 23°C - Essai de traction

Ces essais permettent de déterminer les contraintes d'élasticité et les propriétés à la rupture. Sauf indication différente, ils sont effectués conformément à la norme ASTM D 412 de 1998 (éprouvette C). On mesure en seconde élongation (i.e. après un cycle d'accommodation) les modules sécants dits "nominaux" (ou contraintes apparentes, en MPa) à 10% d'allongement (noté "MA10"). Toutes ces mesures de traction sont effectuées dans les conditions normales de température et d'hygrométrie, selon la norme ASTM D 1349 de 1999 et reportées dans le tableau 1.

Tout d'abord, les résultats du tableau 1 montrent que l'utilisation d'un polyphénol aromatique et d'un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle, dans la composition témoin T2 permet d'obtenir une rigidité à 23°C bien plus élevée que celle d'une composition dépourvue de résine renforçante (T0) et équivalente à celle d'une composition comprenant une résine renforçante de l'état de la technique (T1). De plus, à l'inverse de T1, la composition T2 ne produit pas de formaldéhyde au cours de sa réticulation, ici par vulcanisation. Néanmoins, cette composition T2 ne présente pas de phase retard de sorte que la résine de la composition T2 réticule de façon précoce.

En plus de sa phase retard, chaque composition selon l'invention I1 et I2 présente une rigidité à 23°C équivalente (I2), voir supérieure (I1), à celle des compositions T1 et T2. De plus, à l'inverse de T1, chaque composition I1 à I2 ne produit pas de formaldéhyde au cours de sa cuisson, ici par réticulation ou vulcanisation.

Chaque composition selon l'invention I1 et I2 présente une phase retard, même courte (I1), et une rigidité suffisante pour permettre un renforcement de la composition de caoutchouc. En outre, cette rigidité peut être augmentée en modifiant d'autres paramètres comme les taux de dérivé de polyphénol aromatique et de composé C1 utilisés.

Enfin, on notera que les résultats du Cmax du tableau 1 indiquent que l'utilisation des composés selon l'invention permet, sinon d'augmenter la tenue de la rigidité à des températures élevées (I1) par rapport aux composés phénoliques et α correspondants (T2), d'au moins maintenir cette rigidité à des températures élevées (I2) par rapport aux composés phénoliques et α correspondants (T2).

On notera également que la phase retard et la rigidité à 23°C peuvent être choisies en fonctions de l'application en faisant varier le groupe -O-Z et notamment les groupes R₇ à R₁₂.

L'invention ne se limite pas aux modes de réalisation décrits précédemment.

Dans d'autres modes de réalisation, on pourra envisager que la résine soit à base d'un ou plusieurs composés aromatiques A1 et d'un ou plusieurs dérivés de composés phénoliques A2 conformément à l'invention et, en plus de ces constituants, à base d'un ou plusieurs aldéhydes additionnels non conformes à l'invention et/ou un ou plusieurs dérivés de polyphénols ou monophénols aromatiques additionnels non conformes à l'invention.

Dans d'autres modes de réalisation non présents dans le tableau 1, on pourra envisager des dérivés de polyphénol aromatique comprenant plusieurs noyaux aromatiques, par exemple benzéniques, au moins deux d'entre eux étant chacun porteur d'au moins deux groupes -O-Z en position méta l'un par rapport à l'autre. Les deux positions ortho d'au moins un des groupes -O-Z de chaque noyau aromatique sont non substituées.

**Tableau 1**

| **Composition** | **Donneur de méthylène** | **Phénol** | **Phase retard** | **MA10 (MPa)** | **Cmax (dN.m)** |
|---|---|---|---|---|---|
| T0 | / | / | / | 6,7 | 16 |
| T1 | Hexa-méthylènetétramine (9) | Résine SRF (8) | / | 16,5 | 43 |

| **Composition** | **Aldéhyde aromatique** | **Polyphénol aromatique** | **Phase retard** | **MA10 (MPa)** | **Cmax (dN.m)** |
|---|---|---|---|---|---|
| T2 | 5-(hydroxyméthyl)-furfural (11) | Phloroglucinol (10) | Non | 15,1 | 24 |

| **Composition** | **Composé aromatique** | **Dérivé de polyphénol aromatique Z=Si(R₇R₈R₉)** | **Phase retard** | **MA10 (MPa)** | **Cmax (dN.m)** |
|---|---|---|---|---|---|
| I1 | C1 | R₇=R₈=R₉=CH₃ (1) | Oui | 20,9 | 32 |

| **Composition** | **Composé aromatique** | **Dérivé de polyphénol aromatique Z=(C(=O)(R₁₀))** | **Phase retard** | **MA10 (MPa)** | **Cmax (dN.m)** |
|---|---|---|---|---|---|
| I2 | C1 | R₁₀=CH₃ (4) | Oui | 14,2 | 25 |

| | | | | | |
|---|---|---|---|---|---|
| (8) Résine précondensée SRF 1524 (de la société Schenectady ; diluée à 75%); (9) Hexa-méthylènetétramine (de la société Sigma-Aldrich ; de pureté ≥ 99%) ; (10) Phloroglucinol (de la société Alfa Aesar ; de pureté 99%) (11) 5-(hydroxyméthyl)-furfural (de la société Aldrich ; de pureté ≥ 99%) | | | | | |

## Revendications

1. Composition de caoutchouc comprenant au moins un élastomère, **caractérisé en ce qu'**elle comprend en outre au moins une résine à base:
A1) d'au moins un composé aromatique issu de la réaction entre un réactif de formule a) 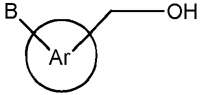 où B représente CHO ou CH₂OH
(α) et un réactif de formule β) ou γ) :
H₂N-R₁ (β) 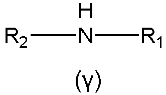
et les mélanges de ces composés,
dans lesquelles :
- Ar représente un noyau aromatique, éventuellement substitué,
- chaque radical R₁, R₂ représente, indépendamment l'un de l'autre, un radical monovalent hydrocarboné ou un radical monovalent hydrocarboné substitué ;
A2) d'au moins un dérivé de composé phénolique choisi parmi :
- A21) au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées, Z étant différent de l'hydrogène ;
- A22) au moins dérivé d'un monophénol aromatique comprenant au moins un noyau aromatique à six chainons portant un unique groupe -O-Z, Z étant différent de l'hydrogène ;
- les deux positions ortho du groupe -O-Z étant non substituées, ou
- au moins une position ortho et la position para du groupe -O-Z étant non substituées ;
- et leurs mélanges,
- chaque groupe -O-Z étant choisi dans le groupe constitué par les groupes -O-Si(R₇R₈R₉), -O-C((=O)(R₁₀)), -O-C((=O)(N(R₁₁R₁₂))), chaque groupe R₇, R₈, R₉ et R₁₀ représente, indépendamment l'un de l'autre, un radical hydrocarboné ou un radical hydrocarboné substitué, chaque groupe R₁₁ et R₁₂ représente, indépendamment l'un de l'autre, l'hydrogène, un radical hydrocarboné ou un radical hydrocarboné substitué.

2. Composition de caoutchouc selon la revendication précédente, dans laquelle le composé aromatique a) répond à la formule générale (II) : 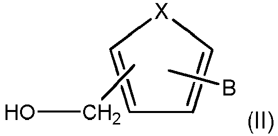 où B représente CHO ou CH₂OH, X représente O, NR₃, NO, S, SO, SO₂, SR₄R₅, R₃ représente un hydrogène, un groupe alkyle, aryle, arylalkyle, alkylaryle ou cycloalkyle, R₄, R₅ représentent chacun, indépendamment les uns des autres, un hydrogène, un groupe alkyle, aryle, arylalkyle, alkylaryle ou cycloalkyle, avantageusement le composé aromatique α) est choisi dans le groupe constitué par le 5-(hydroxyméthyl)-furfural, le 2,5-di(hydroxyméthyle)furane et les mélanges de ces composés.

3. Composition de caoutchouc selon l'une quelconque des revendications précédentes, dans laquelle l'une ou plusieurs des conditions suivantes est respectée :
- le noyau aromatique du dérivé du polyphénol aromatique est porteur de trois groupes -O-Z en position méta les uns par rapport aux autres, avantageusement,
- le noyau aromatique du dérivé du polyphénol aromatique les deux positions ortho de chaque groupe -O-Z sont non substituées,
- le reste du noyau aromatique du dérivé du polyphénol aromatique est non substitué.

4. Composition selon l'une quelconque des revendications précédentes, dans laquelle avantageusement l'une ou plusieurs des conditions suivantes est en outre respectée :
- le dérivé du polyphénol aromatique comprend plusieurs noyaux aromatiques, au moins deux d'entre eux étant chacun porteur d'au moins deux groupes -O-Z en position méta l'un par rapport à l'autre, les deux positions ortho d'au moins un des groupes -O-Z d'au moins un noyau aromatique étant non substituées,
- au moins un des noyaux aromatiques du dérivé du polyphénol aromatique est porteur de trois groupes -O-Z en position méta les uns par rapport aux autres,
- les deux positions ortho de chaque groupe -O-Z d'au moins un noyau aromatique du dérivé du polyphénol aromatique sont non substituées,
- les deux positions ortho de chaque groupe -O-Z de chaque noyau aromatique du dérivé du polyphénol aromatique sont non substituées.

5. Composition selon l'une quelconque des revendications précédentes, dans laquelle le dérivé du polyphénol aromatique est choisi dans le groupe constitué par les dérivés du résorcinol, du phloroglucinol, du 2,2',4,4'-tétrahydroxydiphényl sulfide, du 2,2',4,4'-tétrahydroxybenzophénone et les mélanges de ces composés.

6. Composition de caoutchouc selon l'une quelconque des revendications précédentes, dans laquelle :
- chaque groupe -O-Z représente un groupe -O-Si(R₇R₈R₉) avec R₇, R₈, R₉ représentant, indépendamment l'un de l'autre, un radical choisi dans le groupe constitué par les radicaux alkyle, aryle, arylalkyle, alkylaryle, cycloalkyle, alcényle, ou
- chaque groupe -O-Z représente un groupe -O-C((=O)(R₁₀)) avec R₁₀ représentant un radical choisi dans le groupe constitué par les radicaux alkyle, aryle, arylalkyle, alkylaryle, cycloalkyle, alcényle ou
- chaque groupe -O-Z représente un groupe -O-C((=O)(N(R₁₁R₁₂))) avec R₁₁, R₁₂ représentant, indépendamment l'un de l'autre, un radical choisi dans le groupe constitué par les radicaux alkyle, aryle, arylalkyle, alkylaryle, cycloalkyle, alcényle et l'hydrogène.

7. Composition selon l'une quelconque des revendications précédentes, dans laquelle le dérivé de polyphénol aromatique est une résine pré-condensée à base :
a. d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
b. d'au moins un composé susceptible de réagir avec le polyphénol comprenant au moins une fonction aldéhyde et/ou au moins un composé susceptible de réagir avec le polyphénol comprenant au moins deux fonctions hydroxyméthyle portées par un noyau aromatique,
les fonctions hydroxyles de la résine pré-condensée restées réactives à l'issue de la condensation de la résine pré-condensée étant substituées par des groupes -O-Z, avantageusement le composé susceptible de réagir avec le polyphénol comprenant au moins une fonction aldéhyde et/ou le composé susceptible de réagir avec le polyphénol comprenant au moins deux fonctions hydroxyméthyle portées par un noyau aromatique est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le benzaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés, plus avantageusement le composé susceptible de réagir avec le polyphénol comprenant au moins une fonction aldéhyde et/ou le composé susceptible de réagir avec le polyphénol comprenant au moins deux fonctions hydroxyméthyle portées par un noyau aromatique est choisi dans le groupe constitué par le 5-(hydroxyméthyl)-furfural, le 2,5-di(hydroxyméthyle)furane et les mélanges de ces composés.

8. Composition de caoutchouc selon l'une quelconque des revendications précédentes, à l'état cuit.

9. Composition de caoutchouc comprenant au moins un élastomère, **caractérisé en ce qu'**elle comprend en outre :
A1) au moins un composé aromatique issu de la réaction entre un réactif de formule α) 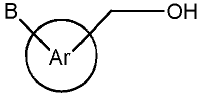 où B représente CHO ou CH₂OH
(α) et un réactif de formule β) ou γ) : 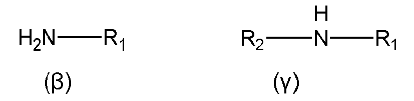 et les mélanges de ces composés,
dans lesquelles :
- Ar représente un noyau aromatique, éventuellement substitué,
- chaque radical R₁, R₂ représente, indépendamment l'un de l'autre, un radical monovalent hydrocarboné ou un radical monovalent hydrocarboné substitué ;
et
A2) au moins un dérivé de composé phénolique choisi parmi :
- A21) au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées, Z étant différent de l'hydrogène ;
- A22) au moins un dérivé d'un monophénol aromatique comprenant au moins un noyau aromatique à six chainons portant un unique groupe -O-Z, Z étant différent de l'hydrogène :
- les deux positions ortho du groupe -O-Z étant non substituées, ou
- au moins une position ortho et la position para du groupe -O-Z étant non substituées
- et leurs mélanges,
- chaque groupe -O-Z étant choisi dans le groupe constitué par les groupes -O-Si(R₇R₈R₉), -O-C((=O)(R₁₀)), -O-C((=O)(N(R₁₁R₁₂))), chaque groupe R₇, R₈, R₉ et R₁₀ représente, indépendamment l'un de l'autre, un radical hydrocarboné ou un radical hydrocarboné substitué, chaque groupe R₁₁ et R₁₂ représente, indépendamment l'un de l'autre, l'hydrogène, un radical hydrocarboné ou un radical hydrocarboné substitué.

10. Composition de caoutchouc selon la revendication précédente, à l'état cru.

11. Procédé de fabrication d'une composition de caoutchouc à l'état cru, **caractérisé en ce qu'**il comprend une étape de mélangeage :
- A1) d'au moins un composé aromatique issu de la réaction entre un réactif de formule α) 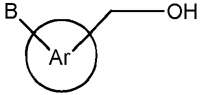 où B représente CHO ou CH₂OH
(α) et un réactif de formule β) ou γ) :
H₂N-R₁ (β) 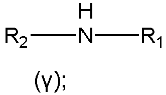
et les mélanges de ces composés,
dans lesquelles :
- Ar représente un noyau aromatique, éventuellement substitué,
- chaque radical R₁, R₂ représente, indépendamment l'un de l'autre, un radical monovalent hydrocarboné ou un radical monovalent hydrocarboné substitué ;
et
- A2) d'au moins un dérivé de composé phénolique choisi parmi :
- A21) au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées, Z étant différent de l'hydrogène ;
- A22) au moins un dérivé d'un monophénol aromatique comprenant au moins un noyau aromatique à six chainons portant un unique groupe -O-Z, Z étant différent de l'hydrogène :
∘ les deux positions ortho du groupe -O-Z étant non substituées, ou
∘ au moins une position ortho et la position para du groupe - O-Z étant non substituées ;
- et leurs mélanges,
- chaque groupe -O-Z étant choisi dans le groupe constitué par les groupes -O-Si(R₇R₈R₉), -O-C((=O)(R₁₀)), -O-C((=O)(N(R₁₁R₁₂))), chaque groupe R₇, R₈, R₉ et R₁₀ représente, indépendamment l'un de l'autre, un radical hydrocarboné ou un radical hydrocarboné substitué, chaque groupe R₁₁ et R₁₂ représente, indépendamment l'un de l'autre, l'hydrogène, un radical hydrocarboné ou un radical hydrocarboné substitué.

12. Procédé de fabrication d'une composition de caoutchouc à l'état cuit, **caractérisé en ce qu'il comprend** :
- une étape de fabrication d'une composition de caoutchouc à l'état cru comprenant une étape de mélangeage :
- A1) d'au moins un composé aromatique issu de la réaction entre un réactif de formule α) 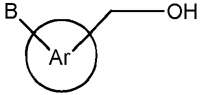 où B représente CHO ou CH₂OH
(α)
et un réactif de formule β) ou γ) :
H₂N-R₁ (β) 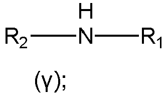
et les mélanges de ces composés,
dans lesquelles :
- Ar représente un noyau aromatique, éventuellement substitué,
- chaque radical R₁, R₂ représente, indépendamment l'un de l'autre, un radical monovalent hydrocarboné ou un radical monovalent hydrocarboné substitué ;
et
- A2) d'au moins un dérivé de composé phénolique choisi parmi
- A21) au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées, Z étant différent de l'hydrogène ;
- A22) au moins un dérivé d'un monophénol aromatique comprenant au moins un noyau aromatique à six chainons portant un unique groupe -O-Z, Z étant différent de l'hydrogène :
∘ les deux positions ortho de la fonction hydroxyle étant non substituées ou
∘ au moins une position ortho et la position para de la fonction hydroxyle étant non substituées,
et leurs mélanges,
- chaque groupe -O-Z étant choisi dans le groupe constitué par les groupes -O-Si(R₇R₈R₉), -O-C((=O)(R₁₀)), -O-C((=O)(N(R₁₁R₁₂))), chaque groupe R₇, R₈, R₉ et R₁₀ représente, indépendamment l'un de l'autre, un radical hydrocarboné ou un radical hydrocarboné substitué, chaque groupe R₁₁ et R₁₂ représente, indépendamment l'un de l'autre, l'hydrogène, un radical hydrocarboné ou un radical hydrocarboné substitué
- puis, une étape de mise en forme de la composition de caoutchouc à l'état cru,
- puis, une étape de réticulation de la composition de caoutchouc durant laquelle on réticule une résine à base du dérivé de composé phénolique et du composé aromatique.

13. Composition de caoutchouc, **caractérisée en ce qu'**elle est susceptible d'être obtenue par un procédé selon l'une quelconque des revendications 11 et 12.

14. Composite de caoutchouc renforcé d'au moins un élément de renfort noyé dans une composition de caoutchouc, **caractérisé en ce que** la composition de caoutchouc est selon l'une quelconque des revendications 1 à 10 ou selon la revendication 13.

15. Pneumatique (1), **caractérisé en ce qu'**il comprend une composition de caoutchouc selon l'une quelconque des revendications 1 à 10 ou selon la revendication 13 ou un composite de caoutchouc selon la revendication précédente.

## Patentansprüche

1. Kautschukzusammensetzung, umfassend mindestens ein Elastomer, **dadurch gekennzeichnet, dass** sie außerdem mindestens ein Harz auf Basis von
A1) mindestens einer aromatischen Verbindung aus der Reaktion zwischen einem Reaktanten der Formel α) 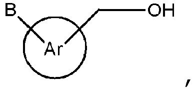 wobei B für CHO oder CH₂OH steht,
(α)
und einem Reaktanten der Formel β) oder γ):
H₂N-R₁ (β) 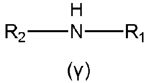
und Mischungen dieser Verbindungen,
in denen:
- Ar für einen gegebenenfalls substituierten aromatischen Kern steht,
- jeder Rest R₁ und R₂ unabhängig voneinander für einen einwertigen Kohlenwasserstoffrest oder einen substituierten einwertigen Kohlenwasserstoffrest steht;
A2) mindestens einem Derivat einer Phenolverbindung, ausgewählt aus:
- A21) mindestens einem Derivat eines aromatischen Polyphenols mit mindestens einem aromatischen Kern, der mindestens zwei -O-Z-Gruppen in meta-Position zueinander trägt, wobei die beiden ortho-Positionen mindestens einer der -O-Z-Gruppen unsubstituiert sind, wobei Z von Wasserstoff verschieden ist;
- A22) mindestens einem Derivat eines aromatischen Monophenols mit mindestens einem sechsgliedrigen aromatischen Kern, der eine einzige -O-Z-Gruppe trägt, wobei Z von Wasserstoff verschieden ist;
- wobei die beiden ortho-Positionen der -O-Z-Gruppe unsubstituiert sind oder
- wobei mindestens eine ortho-Position und die para-Position der -O-Z-Gruppe unsubstituiert sind;
- und Mischungen davon,
- wobei jede -O-Z-Gruppe aus der Gruppe bestehend aus den Gruppen -O-Si (R₇R₈R₉), -O-C((=O)(R₁₀)) und -O-C((=O)(N(R₁₁R₁₂))) ausgewählt ist, jede Gruppe R₇, R₈, R₉ und R₁₀ unabhängig voneinander für einen Kohlenwasserstoffrest oder einen substituierten Kohlenwasserstoffrest steht und jede Gruppe R₁₁ und R₁₂ unabhängig voneinander für Wasserstoff, einen Kohlenwasserstoffrest oder einen substituierten Kohlenwasserstoffrest steht;
umfasst.

2. Kautschukzusammensetzung nach dem vorhergehenden Anspruch, wobei die aromatische Verbindung α) der allgemeinen Formel (II) entspricht: 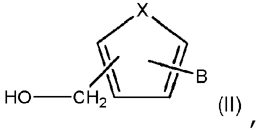 wobei B für CHO oder CH₂OH steht, X für O, NR₃, NO, S, SO, SO₂ oder SR₄R₅ steht, R₃ für Wasserstoff oder eine Alkyl-, Aryl-, Arylalkyl-, Alkylaryl- oder Cycloalkylgruppe steht, R₄ und R₅ jeweils unabhängig voneinander für Wasserstoff oder eine Alkyl-, Aryl-, Arylalkyl-, Alkylaryl- oder Cycloalkylgruppe stehen, vorteilhafterweise die aromatische Verbindung α) aus der Gruppe bestehend aus 5-(Hydroxymethyl)furfural, 2,5-Di(hydroxymethyl)furfural und Mischungen dieser Verbindungen ausgewählt ist.

3. Kautschukzusammensetzung nach einem der vorhergehenden Ansprüche, wobei eine oder mehrere der folgenden Bedingungen erfüllt ist bzw. sind:
- der aromatische Kern des Derivats des aromatischen Polyphenols trägt vorteilhafterweise drei -O-Z-Gruppen in meta-Position zueinander,
- an dem aromatischen Kern des Derivats des aromatischen Polyphenols sind die beiden ortho-Positionen jeder -O-Z-Gruppe unsubstituiert,
- der Rest des aromatischen Kerns des Derivats des aromatischen Polyphenols ist unsubstituiert.

4. Zusammensetzung nach einem der vorhergehenden Ansprüche, wobei vorteilhafterweise außerdem eine oder mehrere der folgenden Bedingungen erfüllt ist bzw. sind:
- das Derivat des aromatischen Polyphenols umfasst mehrere aromatische Kerne, von denen mindestens zwei jeweils mindestens zwei -O-Z-Gruppen in meta-Position zueinander tragen, wobei die beiden ortho-Positionen mindestens einer der -O-Z-Gruppen mindestens eines aromatischen Kerns unsubstituiert sind,
- mindestens einer der aromatischen Kerne des Derivats des aromatischen Polyphenols trägt drei -O-Z-Gruppen in meta-Position zueinander,
- die beiden ortho-Positionen jeder -O-Z-Gruppe mindestens eines aromatischen Kerns des Derivats des aromatischen Polyphenols sind unsubstituiert,
- die beiden ortho-Positionen jeder -O-Z-Gruppe jedes aromatischen Kerns des Derivats des aromatischen Polyphenols sind unsubstituiert.

5. Zusammensetzung nach einem der vorhergehenden Ansprüche, wobei das Derivat des aromatischen Polyphenols aus der Gruppe bestehend aus Resorcinol-, Phloroglucinol-, 2,2',4,4'-Tetrahydroxydiphenylsulfid- und 2,2',4,4'-Tetrahydroxybenzophenon-Derivaten und Mischungen dieser Verbindungen ausgewählt ist.

6. Kautschukzusammensetzung nach einem der vorhergehenden Ansprüche, wobei:
- jede -O-Z-Gruppe für eine Gruppe -O-Si(R₇R₈R₉) steht, wobei R₇, R₈ und R₉ unabhängig voneinander für einen Rest aus der Gruppe bestehend aus Alkyl-, Aryl-, Arylalkyl-, Alkylaryl-, Cycloalkyl- und Alkenylresten stehen, oder
- jede -O-Z-Gruppe für eine Gruppe -O-C((=O)(R₁₀)) steht, wobei R₁₀ für einen Rest aus der Gruppe bestehend aus Alkyl-, Aryl-, Arylalkyl-, Alkylaryl-, Cycloalkyl- und Alkenylresten steht, oder
- jede -O-Z-Gruppe für eine Gruppe -O-C((=O)(N(R₁₁R₁₂))) steht, wobei R₁₁ und R₁₂ unabhängig voneinander für einen Rest aus der Gruppe bestehend aus Alkyl-, Aryl-, Arylalkyl-, Alkylaryl-, Cycloalkyl- und Alkenylresten und Wasserstoff stehen.

7. Zusammensetzung nach einem der vorhergehenden Ansprüche, wobei es sich bei dem Derivat eines aromatischen Polyphenols um ein vorkondensiertes Harz auf Basis von
a. mindestens einem aromatischen Polyphenol mit mindestens einem aromatischen Kern, der mindestens zwei Hydroxylfunktionen in meta-Position zueinander trägt, wobei die beiden ortho-Positionen mindestens einer der Hydroxylfunktionen unsubstituiert sind; und
b. mindestens einer gegenüber dem Polyphenol reaktionsfähigen Verbindung mit mindestens einer Aldehydfunktion und/oder mindestens einer gegenüber dem Polyphenol reaktionsfähigen Verbindung mit mindestens zwei Hydroxymethylfunktionen an einem aromatischen Kern
handelt, wobei die am Ende der Kondensation des vorkondensierten Harzes reaktiv gebliebenen Hydroxylfunktionen des vorkondensierten Harzes durch -O-Z-Gruppen ersetzt werden, vorteilhafterweise die gegenüber dem Polyphenol reaktionsfähige Verbindung mit mindestens einer Aldehydfunktion und/oder die gegenüber dem Polyphenol reaktionsfähige Verbindung mit mindestens zwei Hydroxymethylfunktionen an einem aromatischen Kern aus der Gruppe bestehend aus einer aromatischen Verbindung mit einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt, Formaldehyd, Benzaldehyd, Furfuraldehyd, 2,5-Furandicarboxaldehyd, 1,4-Benzoldicarboxaldehyd, 1,3-Benzoldicarboxaldehyd, 1,2-Benzoldicarboxaldehyd und Mischungen dieser Funktionen ausgewählt sind, noch vorteilhafter die gegenüber dem Polyphenol reaktionsfähige Verbindung mit mindestens einer Aldehydfunktion und/oder die gegenüber dem Polyphenol reaktionsfähige Verbindung mit mindestens zwei Hydroxymethylfunktionen an einem aromatischen Kern aus der Gruppe bestehend aus 5-(Hydroxymethyl)furfural, 2,5-Di(hydroxymethyl)furan und Mischungen dieser Verbindungen ausgewählt ist.

8. Kautschukzusammensetzung nach einem der vorhergehenden Ansprüche in gehärtetem Zustand.

9. Kautschukzusammensetzung, umfassend mindestens ein Elastomer, **dadurch gekennzeichnet, dass** sie außerdem
A1) mindestens eine aromatische Verbindung aus der Reaktion zwischen einem Reaktanten der Formel α) 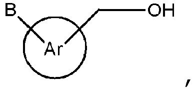 wobei B für CHO oder CH₂OH steht,
(α)
und einem Reaktanten der Formel β) oder γ):
H₂N-R₁ (β) 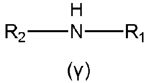
und Mischungen dieser Verbindungen,
in denen:
- Ar für einen gegebenenfalls substituierten aromatischen Kern steht,
- jeder Rest R₁ und R₂ unabhängig voneinander für einen einwertigen Kohlenwasserstoffrest oder einen substituierten einwertigen Kohlenwasserstoffrest steht;
und
A2) mindestens ein Derivat einer Phenolverbindung, ausgewählt aus:
- A21) mindestens einem Derivat eines aromatischen Polyphenols mit mindestens einem aromatischen Kern, der mindestens zwei -O-Z-Gruppen in meta-Position zueinander trägt, wobei die beiden ortho-Positionen mindestens einer der -O-Z-Gruppen unsubstituiert sind, wobei Z von Wasserstoff verschieden ist;
- A22) mindestens einem Derivat eines aromatischen Monophenols mit mindestens einem sechsgliedrigen aromatischen Kern, der eine einzige -O-Z-Gruppe trägt, wobei Z von Wasserstoff verschieden ist;
- wobei die beiden ortho-Positionen der -O-Z-Gruppe unsubstituiert sind oder
- wobei mindestens eine ortho-Position und die para-Position der -O-Z-Gruppe unsubstituiert sind;
- und Mischungen davon,
- wobei jede -O-Z-Gruppe aus der Gruppe bestehend aus den Gruppen -O-Si (R₇R₈R₉), -O-C((=O)(R₁₀)) und -O-C((=O)(N(R₁₁R₁₂))) ausgewählt ist, jede Gruppe R₇, R₈, R₉ und R₁₀ unabhängig voneinander für einen Kohlenwasserstoffrest oder einen substituierten Kohlenwasserstoffrest steht und jede Gruppe R₁₁ und R₁₂ unabhängig voneinander für Wasserstoff, einen Kohlenwasserstoffrest oder einen substituierten Kohlenwasserstoffrest steht;
umfasst.

10. Kautschukzusammensetzung nach dem vorhergehenden Anspruch in rohem Zustand.

11. Verfahren zur Herstellung einer Kautschukzusammensetzung in rohem Zustand, **dadurch gekennzeichnet, dass** es einen Schritt des Mischens von
A1) mindestens einer aromatischen Verbindung aus der Reaktion zwischen einem Reaktanten der Formel α) 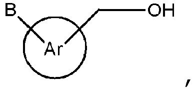 wobei B für CHO oder CH₂OH steht,
(α) und einem Reaktanten der Formel β) oder γ):
H₂N-R₁ (β) 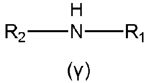
und Mischungen dieser Verbindungen,
in denen:
- Ar für einen gegebenenfalls substituierten aromatischen Kern steht,
- jeder Rest R₁ und R₂ unabhängig voneinander für einen einwertigen Kohlenwasserstoffrest oder einen substituierten einwertigen Kohlenwasserstoffrest steht;
und
A2) mindestens einem Derivat einer Phenolverbindung, ausgewählt aus:
- A21) mindestens einem Derivat eines aromatischen Polyphenols mit mindestens einem aromatischen Kern, der mindestens zwei
- O-Z-Gruppen in meta-Position zueinander trägt, wobei die beiden ortho-Positionen mindestens einer der -O-Z-Gruppen unsubstituiert sind, wobei Z von Wasserstoff verschieden ist;
- A22) mindestens einem Derivat eines aromatischen Monophenols mit mindestens einem sechsgliedrigen aromatischen Kern, der eine einzige -O-Z-Gruppe trägt, wobei Z von Wasserstoff verschieden ist;
- wobei die beiden ortho-Positionen der -O-Z-Gruppe unsubstituiert sind oder
- wobei mindestens eine ortho-Position und die para-Position der -O-Z-Gruppe unsubstituiert sind;
- und Mischungen davon,
- wobei jede -O-Z-Gruppe aus der Gruppe bestehend aus den Gruppen -O-Si (R₇R₈R₉), -O-C((=O)(R₁₀)) und -O-C((=O)(N(R₁₁R₁₂))) ausgewählt ist, jede Gruppe R₇, R₈, R₉ und R₁₀ unabhängig voneinander für einen Kohlenwasserstoffrest oder einen substituierten Kohlenwasserstoffrest steht und jede Gruppe R₁₁ und R₁₂ unabhängig voneinander für Wasserstoff, einen Kohlenwasserstoffrest oder einen substituierten Kohlenwasserstoffrest steht;
umfasst.

12. Verfahren zur Herstellung einer Kautschukzusammensetzung in gehärtetem Zustand, **dadurch gekennzeichnet, dass** es Folgendes umfasst:
- einen Schritt der Herstellung einer Kautschukzusammensetzung in rohem Zustand, umfassend einen Schritt des Mischens von
A1) mindestens einer aromatischen Verbindung aus der Reaktion zwischen einem Reaktanten der Formel α) 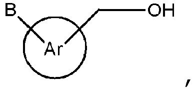 wobei B für CHO oder CH₂OH steht,
(α)
und einem Reaktanten der Formel β) oder γ):
H₂N-R₁ (β) 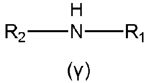
und Mischungen dieser Verbindungen,
in denen:
- Ar für einen gegebenenfalls substituierten aromatischen Kern steht,
- jeder Rest R₁ und R₂ unabhängig voneinander für einen einwertigen Kohlenwasserstoffrest oder einen substituierten einwertigen Kohlenwasserstoffrest steht;
und
A2) mindestens einem Derivat einer Phenolverbindung, ausgewählt aus:
- A21) mindestens einem Derivat eines aromatischen Polyphenols mit mindestens einem aromatischen Kern, der mindestens zwei -O-Z-Gruppen in meta-Position zueinander trägt, wobei die beiden ortho-Positionen mindestens einer der -O-Z-Gruppen unsubstituiert sind, wobei Z von Wasserstoff verschieden ist;
- A22) mindestens einem Derivat eines aromatischen Monophenols mit mindestens einem sechsgliedrigen aromatischen Kern, der eine einzige -O-Z-Gruppe trägt, wobei Z von Wasserstoff verschieden ist;
- wobei die beiden ortho-Positionen der -O-Z-Gruppe unsubstituiert sind oder
- wobei mindestens eine ortho-Position und die para-Position der -O-Z-Gruppe unsubstituiert sind;
- und Mischungen davon,
- wobei jede -O-Z-Gruppe aus der Gruppe bestehend aus den Gruppen -O-Si (R₇R₈R₉), -O-C((=O)(R₁₀)) und -O-C((=O)(N(R₁₁R₁₂))) ausgewählt ist, jede Gruppe R₇, R₈, R₉ und R₁₀ unabhängig voneinander für einen Kohlenwasserstoffrest oder einen substituierten Kohlenwasserstoffrest steht und jede Gruppe R₁₁ und R₁₂ unabhängig voneinander für Wasserstoff, einen Kohlenwasserstoffrest oder einen substituierten Kohlenwasserstoffrest steht; umfasst;
- dann einen Schritt des Formens der Kautschukzusammensetzung in rohem Zustand,
- dann einen Schritt des Vernetzens der Kautschukzusammensetzung, bei dem ein Phenol-Aldehyd-Harz auf Basis des Derivats eines aromatischen Polyphenols und des Aldehyds vernetzt wird.

13. Kautschukzusammensetzung, **dadurch gekennzeichnet, dass** sie durch ein Verfahren nach einem der Ansprüche 11 und 12 erhältlich ist.

14. Kautschukverbundwerkstoff, der mit mindestens einem in eine Kautschukzusammensetzung eingebetteten Verstärkungselement verstärkt ist, **dadurch gekennzeichnet, dass** die Kautschukzusammensetzung einem der Ansprüche 1 bis 10 oder Anspruch 13 entspricht.

15. Reifen (1), **dadurch gekennzeichnet, dass** er eine Kautschukzusammensetzung nach einem der Ansprüche 1 bis 10 oder nach Anspruch 13 oder einen Kautschukverbundwerkstoff nach dem vorhergehenden Anspruch umfasst.

## Claims

1. Rubber composition comprising at least elastomer, **characterized in that** it also comprises at least one resin based:
A1) on at least one aromatic compound resulting from the reaction between a reagent of formula α) 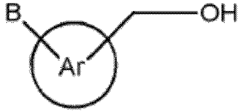 where B represents CHO or CH₂OH
(α) and a reagent of β) or γ) :
H₂N-R₁ (β) 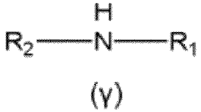
and the mixtures of these compounds,
in which:
- Ar represents an optionally substituted, aromatic nucleus,
- each R₁ and R₂ radical represents, independently of one another, a monovalent hydrocarbon-based radical or a substituted monovalent hydrocarbon-based radical;
A2) on at least one phenolic compound derivative chosen from:
- A21) at least one derivative of an aromatic polyphenol comprising at least one aromatic nucleus bearing at least two -O-Z groups in the meta position with respect to one another, the two ortho groups of at least one of the -O-Z groups being unsubstituted, Z being other than hydrogen;
- A22) at least one derivative of an aromatic monophenol comprising at least one 6-membered aromatic nucleus bearing a single -O-Z group, Z being other than hydrogen;
- the two ortho positions of the -O-Z group being unsubstituted,
or
- at least one ortho position and the para position of the -O-Z group being unsubstituted;
- and mixtures thereof,
- each -O-Z group being chosen from the group consisting of the -O-Si(R₇,R₈,R₉), -O-C((=O)(R₁₀)) and -O-C((=O)(N(R₁₁R₁₂))) groups, each R₇, R₈, R₉ and R₁₀ group represents, independently of one another, a hydrocarbon-based radical or a substituted hydrocarbon-based radical, each R₁₁ and R₁₂ group represents, independently of one another, hydrogen, a hydrocarbon-based radical or a substituted hydrocarbon-based radical.

2. Rubber composition according to the preceding claim, in which the aromatic composition α) corresponds to general formula (II): 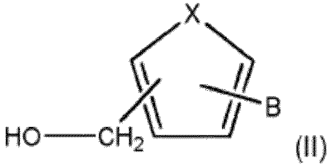 where B represents CHO or CH₂OH, X represents O, NR₃, NO, S, SO, SO₂, SR₄R₅, R₃ represents a hydrogen, or an alkyl, aryl, arylalkyl, alkylaryl or cycloalkyl group, R₄ and R₅ each represent, independently of one another, a hydrogen, or an alkyl, aryl, arylalkyl, alkylaryl or cycloalkyl group; advantageously, the aromatic compound α) is chosen from the group consisting of 5-(hydroxymethyl)furfural and 2,5-di(hydroxymethyl)furan, and the mixtures of these compounds.

3. Rubber composition according to either one of the preceding claims, in which one or more of the following conditions is respected:
- the aromatic nucleus of the derivative of the aromatic polyphenol bears three -O-Z groups in the meta position with respect to one another, advantageously,
- the aromatic nucleus of the derivative of the aromatic polyphenol the two ortho positions of each -O-Z group are unsubstituted,
- the remainder of the aromatic nucleus of the derivative of the aromatic polyphenol is unsubstituted.

4. Composition according to any one of the preceding claims, in which advantageously one or more of the following conditions is also respected:
- the derivative of the aromatic polyphenol comprises several aromatic nuclei, at least two of them each bearing at least two -O-Z groups in the meta position with respect to one another, the two ortho positions of at least one of the - O-Z groups of at least one aromatic nucleus being unsubstituted,
- at least one of the aromatic nuclei of the derivative of the aromatic polyphenol bears three -O-Z groups in the meta position with respect to one another,
- the two ortho positions of each -O-Z group of at least one aromatic nucleus of the derivative of the aromatic polyphenol are unsubstituted,
- the two ortho positions of each -O-Z group of each aromatic nucleus of the derivative of the aromatic polyphenol are unsubstituted.

5. Composition according to any one of the preceding claims, in which the derivative of the aromatic polyphenol is chosen from the group consisting of resorcinol derivatives, phloroglucinol derivatives, 2,2',4,4'-tetrahydroxydiphenyl sulfide derivatives and 2,2',4,4'-tetrahydroxybenzophenone derivatives, and the mixtures of these compounds.

6. Rubber composition according to any one of the preceding claims, in which:
- each -O-Z groups represents an -O-Si (R₇R₈R₉) group with R₇, R₈ and R₉ representing, independently of one another, a radical chosen from the group consisting of alkyl, aryl, arylalkyl, alkylaryl, cycloalkyl and alkenyl radicals, or
- each -O-Z group represents an -O-C((=O)(R₁₀)) group with R₁₀ representing a radical chosen from the group consisting of alkyl, aryl, arylalkyl, alkylaryl, cycloalkyl and alkenyl radicals, or
- each -O-Z group represents an -O-C((=O)(N(R₁₁R₁₂))) group with R₁₁ and R₁₂ representing, independently of one another, a radical chosen from the group consisting of alkyl, aryl, arylalkyl, alkylaryl, cycloalkyl and alkenyl radicals and hydrogen.

7. Composition according to any one of the preceding claims, in which the aromatic polyphenol derivative is a precondensed resin based:
a. on at least one aromatic polyphenol, comprising at least one aromatic nucleus bearing at least two hydroxyl functions in the meta position with respect to one another, the two ortho positions of at least one of the hydroxyl functions being unsubstituted; and
b. on at least one compound capable of reacting with the polyphenol comprising at least one aldehyde function and/or at least one compound capable of reacting with the polyphenol comprising at least two hydroxylmethyl functions borne by an aromatic nucleus,
the hydroxyl functions of the precondensed resin having remained reactive at the end of the condensation of the precondensed resin being substituted with -O-Z groups, advantageously the compound capable of reacting with the polyphenol comprising at least one aldehyde function and/or the compound capable of reacting with the polyphenol comprising at least two hydroxymethyl functions borne by an aromatic nucleus is chosen from the group consisting of an aromatic compound comprising an aromatic nucleus bearing at least two functions, one of these functions being a hydroxymethyl function, the other being an aldehyde function or a hydroxymethyl function, formaldehyde, benzaldehyde, furfuraldehyde, 2,5-furandicarboxaldehyde, 1,4-benzenedicarboxaldehyde, 1,3-benzenedicarboxaldehyde and 1,2-benzenedicarboxaldehyde, and the mixtures of these compounds, more advantageously the compound capable of reacting with the polyphenol comprising at least one aldehyde function and/or the compound of reacting with the polyphenol comprising at least two hydroxymethyl functions borne by an aromatic nucleus is chosen from the group consisting of 5-(hydroxymethyl)furfural and 2,5-di(hydroxymethyl)furan, and the mixtures of these compounds.

8. Rubber composition according to any one of the preceding claims, in the cured state.

9. Rubber composition comprising at least one elastomer, **characterized in that** it also comprises:
A) at least one aromatic compound resulting from the reaction between a reagent of formula α) 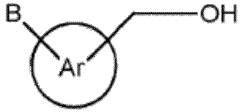 where B represents CHO or CH₂OH
(α)
and a reagent of formula β) or γ): 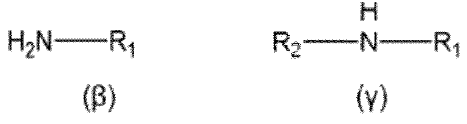 and the mixtures of these compounds,
in which:
- Ar represents an optionally substituted, aromatic nucleus,
- each R₁ and R₂ radical represents, independently of one another, a monovalent hydrocarbon-based radical or a substituted monovalent hydrocarbon-based radical;
and
A2) at least one phenolic compound derivative chosen from:
- A21) at least one derivative of an aromatic polyphenol comprising at least one aromatic nucleus bearing at least two -O-Z groups in the meta position with respect to one another, the two ortho groups of at least one of the -O-Z groups being unsubstituted, Z being other than hydrogen;
- A22) at least one derivative of an aromatic monophenol comprising at least one 6-membered aromatic nucleus bearing a single -O-Z group, Z being other than hydrogen;
- the two ortho positions of the -O-Z group being unsubstituted,
or
- at least one ortho position and the para position of the -O-Z group being unsubstituted;
- and mixtures thereof,
- each -O-Z group being chosen from the group consisting of the -O-Si (R₇,R₈,R₉), -O-C((=O)(R₁₀)) and -O-C((=O)(N(R₁₁R₁₂))) groups, each R₇, R₈, R₉ and R₁₀ group represents, independently of one another, a hydrocarbon-based radical or a substituted hydrocarbon-based radical, each R₁₁ and R₁₂ group represents, independently of one another, hydrogen, a hydrocarbon-based radical or a substituted hydrocarbon-based radical.

10. Rubber composition according to the preceding claim, in the raw state.

11. Method for producing a rubber composition in the raw state, **characterized in that** it comprises a step of mixing:
- A1) at least one aromatic compound resulting from reaction between a reagent of formula α) 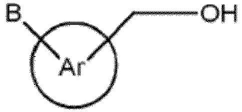 where B represents CHO or CH₂OH
(α) and a reagent of formula β) or γ): 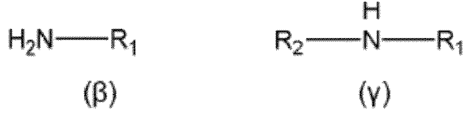 and the mixtures of these compounds,
in which:
- Ar represents an optionally substituted, aromatic nucleus,
- each R₁ and R₂ radical represents, independently of one another, a monovalent hydrocarbon-based radical or a substituted monovalent hydrocarbon-based radical;
and
A2) at least one phenolic compound derivative chosen from:
- A21) at least one derivative of an aromatic polyphenol comprising at least one aromatic nucleus bearing at least two -O-Z groups in the meta position with respect to one another, the two ortho groups of at least one of the -O-Z groups being unsubstituted, Z being other than hydrogen;
- A22) at least one derivative of an aromatic monophenol comprising at least one 6-membered aromatic nucleus bearing a single -O-Z group, Z being other than hydrogen;
- the two ortho positions of the -O-Z group being unsubstituted,
or
- at least one ortho position and the para position of the -O-Z group being unsubstituted;
- and mixtures thereof,
- each -O-Z group being chosen from the group consisting of the -O-Si (R₇,R₈,R₉), -O-C((=O)(R₁₀)) and -O-C((=O)(N(R₁₁R₁₂))) groups, each R₇, R₈, R₉ and R₁₀ group represents, independently of one another, a hydrocarbon-based radical or a substituted hydrocarbon-based radical, each R₁₁ and R₁₂ group represents, independently of one another, hydrogen, a hydrocarbon-based radical or a substituted hydrocarbon-based radical.

12. Method for producing a rubber composition in the cured state, **characterized in that it comprises:**
- a step of producing a rubber composition in the raw state, comprising a step of mixing:
- A1) at least one aromatic compound resulting from the reaction between a reagent of formula α) 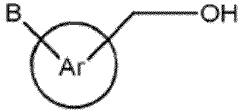 where B represents CHO or CH₂OH
(α) and a reagent of formula β) or γ):
H₂N-R₁ (β) 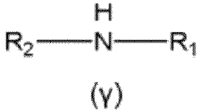
and the mixtures of these compounds,
in which:
- Ar represents an optionally substituted, aromatic nucleus,
- each R₁ and R₂ radical represents, independently of one another, a monovalent hydrocarbon-based radical or a substituted monovalent hydrocarbon-based radical;
and
- A2) at least one phenolic compound derivative chosen from:
- A21) at least one derivative of an aromatic polyphenol comprising at least one aromatic nucleus bearing at least two -O-Z groups in the meta position with respect to one another, the two ortho groups of at least one of the -O-Z groups being unsubstituted, Z being other than hydrogen;
- A22) at least one derivative of an aromatic monophenol comprising at least one 6-membered aromatic nucleus bearing a single -O-Z group, Z being other than hydrogen;
- the two ortho positions of the hydroxyl function being unsubstituted,
or
- at least one ortho position and the para position of the hydroxyl function being unsubstituted;
- and mixtures thereof,
- each -O-Z group being chosen from the group consisting of the -O-Si (R₇,R₈,R₉), -O-C((=O)(R₁₀)) and -O-C((=O)(N(R₁₁R₁₂))) groups, each R₇, R₈, R₉ and R₁₀ group represents, independently of one another, a hydrocarbon-based radical or a substituted hydrocarbon-based radical, each R₁₁ and R₁₂ group represents, independently of one another, hydrogen, a hydrocarbon-based radical or a substituted hydrocarbon-based radical,
- then, a step of forming the rubber composition in the raw state,
- then, a step of crosslinking the rubber composition, during which a resin based on the phenolic compound derivative and on the aromatic compound is crosslinked.

13. Rubber composition, **characterized in that** it can be obtained by means of a method according to either one of Claims 11 and 12.

14. Rubber composite reinforced with at least one reinforcer element embedded in a rubber composition, **characterized in that** the rubber composition is according to any one of Claims 1 to 10 or according to Claim 13.

15. Tyre (1), **characterized in that** it comprises a rubber composition according to any one of Claims 1 to 10 or according to Claim 13 or a rubber composite according to the preceding claim.
